# EUROPEAN PATENT APPLICATION

(11) **EP 2 017 734 A2**
(43) Date of publication of application: **21.01.2009**
(21) Application number: 07112610.6
(22) Date of filing: 17.07.2007
(51) Int. Cl.: G06F 9/46, H04L 29/08

(54) **Inter-process communication at a mobile device**

(71) Applicant: Nextair Corporation, Waterloo, ON N2L 3W8 (CA)
(72) Inventor: Neil, Tim, Mississauga Ontario L5M 7H2 (CA); Chalmers, Paul, La Salle Ontario N9J 3P6 (CA)
(74) Representative: Dawson, Elizabeth Ann

(57) **Abstract**

Communication between interfaces to remotely executed applications, i.e., Inter-Process Communication, may be enabled at a wireless device through the association of a message stored in an outbound message queue with an indication of a local interface to a remote application, to which interface the message is to be passed. A manager of the outbound message queue may determine whether a given outbound message is associated with a local interface to a remote application and, if so, may pass the given outbound message to an inbound processing module such that the message is received by the specified local interface to a remote application.

## Description

The present disclosure relates generally to software, devices and methods allowing client applications on varied mobile devices to interact with server-side applications and, more particularly, to the client applications intercommunicating with other applications executed on the same mobile device.

Wireless connectivity is a feature of the modern telecommunications environment. An increasing range of people are using a wide variety of wireless data networks to access corporate data applications.

However, there are numerous competing mobile devices that can be used to achieve this. Each device has its own operating system and its own display characteristics. Operating systems are not mutually compatible, nor are the display characteristics - some are color, some are black and white, some are text-only, some are pictorial.

At the same time, an increasing number of mobile device users are people without a technical background or high level of educational achievement. Such people are often intimidated by the need to run complex installation programs. Furthermore, at present, such installation programs generally depend on cable connections to a personal computer by the means of a "cradle" or other such device.

Therefore, a mechanism whereby a mobile client for a server-side application may be enabled for multiple wireless devices with minimal modification of the application at the server is required. Furthermore, it is desirable that inter-process communication between the mobile clients be provided for.

### GENERAL

In accordance with the present disclosure, data from an application executing at a remote computing device may be presented at a remote wireless device. The wireless device may be provided with an application definition file, which may also be referred to as an "application description file", that contains: definitions for a user interface format for the application at the wireless device; a format of messages for exchange of data generated by the application; and a format for storing data related to the application at the wireless device. Using the definitions, the wireless device may receive data from the application and present an interface for the application. Preferably, the application definition file is an XML file. Similarly, application specific network messages provided to the device may also be formed using XML. In the preferred embodiment, the data from the application is presented at the mobile device by virtual machine software that uses the application definition file.

Communication between the interfaces to remotely executed applications, i.e., Inter-Process Communication, may be enabled at the wireless device through the association of a message stored in an outbound message queue with an indication of a local interface to a remote application, to which interface the message is to be passed. A manager of the outbound message queue may determine whether a given outbound message is associated with a local interface to a remote application and, if so, may pass the given outbound message to an inbound processing module such that the message is received by the specified local interface to a remote application.

In accordance with an aspect of the present disclosure there may be provided a method of handling outgoing messages. The method may comprise receiving a document defining a format for outgoing messages, the outgoing messages including a payload, generating, according to the format, a message, generating an indication of a local application for the message based on information provided in the document, storing the message and storing the indication of the local application in association with the message. In other aspects, a mobile communication apparatus may be provided to carry out the method and a computer readable medium is provided to allow a processor in a mobile communication device to carry out the method.

In accordance with an aspect of the present disclosure there may be provided a method of handling an outbound message queue. The method may comprise selecting a candidate message record, the message record including a message portion and determining whether the candidate message is associated with a local application. The method may also include, if the candidate message is associated with the local application, passing the message portion of the message record to an inbound processing module and passing an indication of the local application to the inbound processing module.

Other aspects and features of the present disclosure will become apparent to those of ordinary skill in the art upon review of the following description of specific embodiments in conjunction with the accompanying figures.

### BRIEF DESCRIPTION OF THE DRAWINGS

In figures that illustrate exemplary embodiments:

FIG. 1 schematically illustrates an exemplary mobile device, including exemplary virtual machine software;

FIG. 2 further illustrates the organization of an exemplary virtual machine at the mobile device of FIG. 1;

FIG. 3 illustrates an operating environment for the device of FIG. 1 including a middleware server;

FIG. 4 illustrates the structure of an example application definition file stored at the middleware server of FIG. 3 used by the device of FIG. 1;

FIG. 5 schematically illustrates the formation of application definition files at the middleware server of FIG. 3;

FIG. 6 schematically illustrates the middleware server of FIG. 3, ub greater detail;

FIG. 7 is a flow diagram illustrating the exchange of sample messages passed between the mobile device, the middleware server and the backend application server of FIG. 3;

FIG. 8 illustrates steps performed at a mobile device under control of the virtual machine of FIG. 2;

FIG. 9 illustrates steps performed at a mobile device under control of the virtual machine of FIG. 2;

FIG. 10 illustrates steps performed at a mobile device under control of the virtual machine of FIG. 2;

FIG. 11 illustrates the format of messages exchanged in the message flow of FIG. 7;

FIG. 12 illustrates a presentation of a user interface for a sample application at a mobile device;

FIG. 13 illustrates a sample portion of an application definition file defining the user interface illustrated in FIG. 12;

FIG. 14 illustrates the format of a message formed in accordance with the sample portion of the application definition file of FIG. 13;

FIG. 15A illustrates a sample portion of an application definition file defining a local storage at a mobile device;

FIG. 15B schematically illustrates local storage in accordance with FIG. 15A;

FIG. 15C illustrates how locally stored data is updated by a sample message in accordance with the sample portion of an application file definition of FIG. 15A;

FIG. 16 illustrates exemplary steps of a method of generating a message associated with a destination local application;

FIG. 17 illustrates exemplary steps of a method of handling an outgoing message that is associated with an indication of a local application;

FIG. 18 is a flow diagram illustrating the exchange of sample messages passed between the mobile device, the middleware server, the backend application server and locally executed interfaces to remote applications; and

FIGS. 19A-19F illustrate another exemplary application definition file.

### DESCRIPTION OF PREFERRED EMBODIMENTS

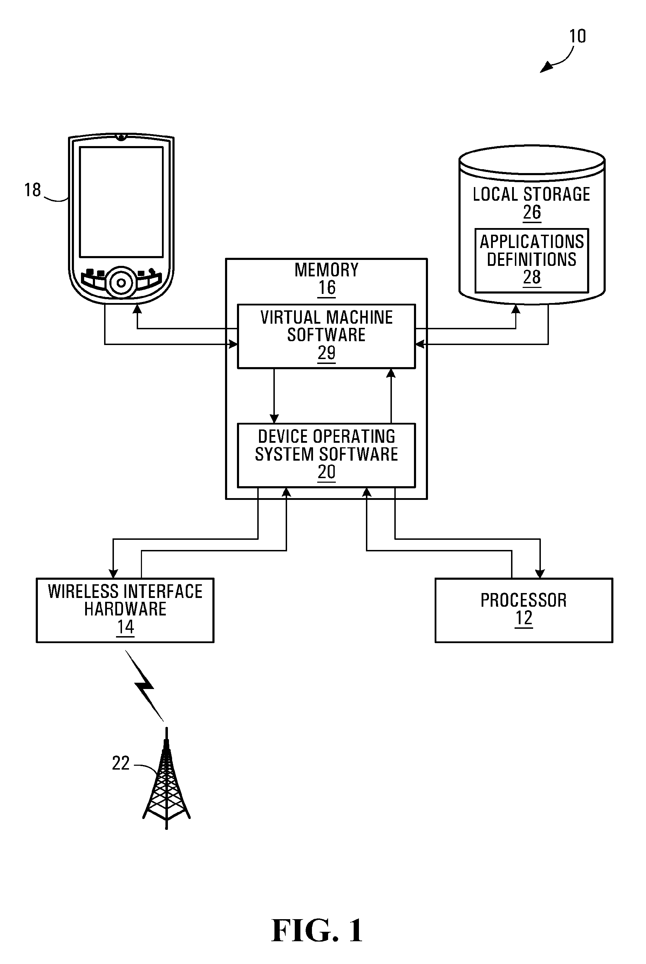

FIG. 1 illustrates elements of an exemplary mobile device 10 in communication with a wireless network 22. The mobile device 10 may be any conventional mobile device, modified to function as described herein. As such, elements of the mobile device 10 include a processor 12, a network interface 14, a storage memory 16, which can comprise volatile and/or persistent storage units such as ROM and RAM, and a user interface 18 typically including a keypad and/or touch-screen. Some embodiments may incorporate a trackwheel or trackball into user interface 18. The network interface 14 enables the mobile device 10 to transmit and receive data over the wireless network 22. The mobile device 10 may, for example, be a WinCE based device, a PalmOS device, a WAP enabled mobile telephone, or the like. The storage memory 16 of the mobile device 10 stores operating system software 20 providing a mobile operating system such as PalmOS, WinCE or the RIM proprietary operating system. The operating system software 20 is generally stored in the storage memory 16 and typically includes graphical user interface software and network interface software having suitable application programming interfaces (APIs) for use by other applications executing at the mobile device 10.

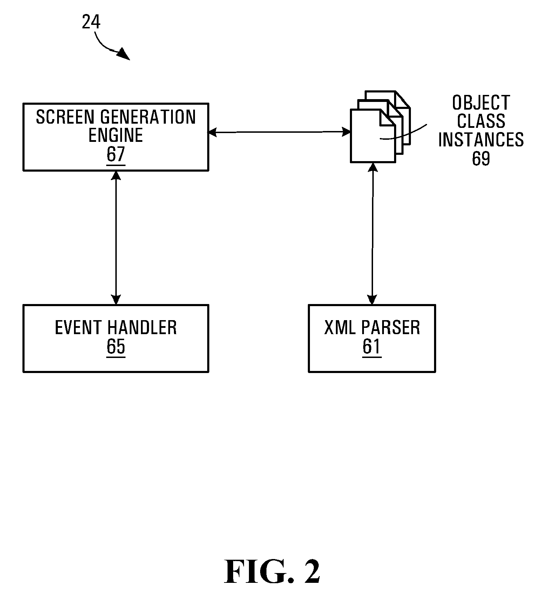

The storage memory 16 at the mobile device 10 further stores exemplary virtual machine software 29. The virtual machine software 29, when executed by the mobile device 10, enables the mobile device 10 to present an interface, for a server-side application provided by a middleware server, as described below. Specifically, a virtual machine 24 (see FIG. 2), which exists through an execution of the virtual machine software 29 on the processor 12, interprets a text application definition file defining: a user interface controlling application functionality and the display format (including display flow) at the mobile device 10 for a particular server-side application; the format of data to be exchanged over the wireless network 22 for the particular server-side application; and the format of data to be stored locally at the mobile device 10 for the particular server-side application. The virtual machine 24 uses the operating system software 20 and associated APIs to interact with the mobile device 10, in accordance with the received application definition file. In this way, the mobile device 10 may present interfaces for a variety of server-side applications, executed at a variety of servers. Moreover, multiple wireless devices may use a common server-side application, as each wireless device executes a similar virtual machine that interprets an application definition file to present a user interface and program flow specifically adapted for the device.

As such, and as will become apparent, the exemplary virtual machine software is specifically adapted to work with the particular mobile device 10. Thus, if the mobile device 10 is a PalmOS or WinCE device, the virtual machine 24 that results from executing the exemplary virtual machine software 29 is, correspondingly, a PalmOS virtual machine or a WinCE virtual machine. As further illustrated in FIG. 1, the virtual machine 24 is capable of accessing the local storage 26 at the mobile device 10.

Other applications, libraries and software may also be present within the memory 16 or the local storage 26 and are not specifically illustrated. For example, the mobile device 10 may store and execute personal information management (PIM) software, including calendar and contact management applications. Similarly, the mobile device 10 could store and execute software allowing the mobile device 10 to perform a number of functions. Software could, for example, interact with the hardware at the mobile device 10 to allow the mobile device 10 to act as a multimedia player; allowing the mobile device 10 to print; allowing the mobile device 10 to interact with other incorporated hardware not specifically illustrated, including, but not limited to, a Bluetooth interface; a Global Positioning Satellite (GPS) Receiver; and the like. The memory 16 may also store software components in the form of object classes that may be used to extend the functionality of the virtual machine 24. As will become apparent, these external software components in the form of object classes allow the virtual machine 24 to become extensible. The object classes may, for example, allow the virtual machine 24 to access additional hardware or software local to the mobile device 10.

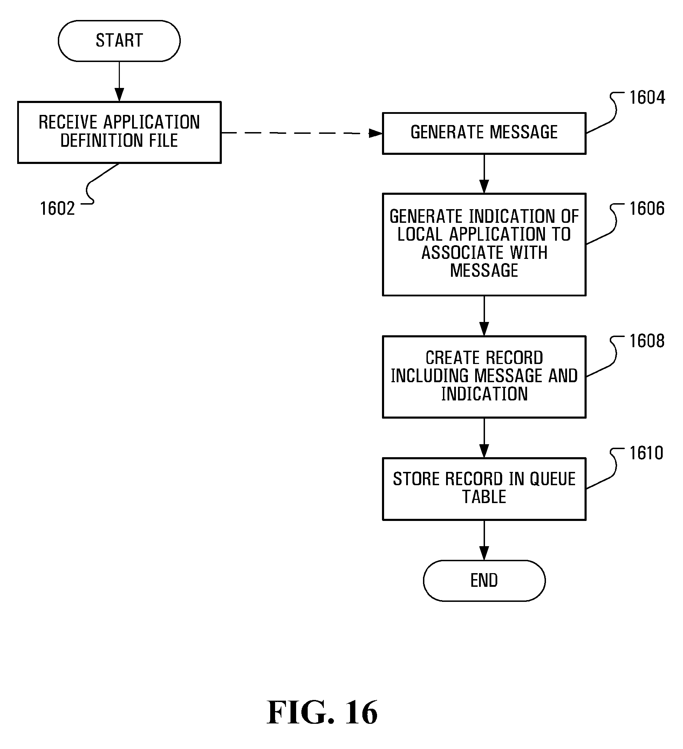

As detailed below, an exemplary application definition file may be formed using a markup language, such as the known eXtensible Markup Language (XML) or a variant thereof. In accordance with an exemplary embodiment, defined XML entities (i.e. elements and/or attributes) are understood by the virtual machine 24. Defined XML elements and attributes are detailed in Appendix "A" (FIGS. 16A-16JJ) of US Patent Application Publication 2003/0060896 A9. The defined XML elements and attributes are interpreted by the virtual machine 24 and may be used as building blocks to present an interface, at the mobile device 10, to server-side applications, as detailed herein.

Specifically, the virtual machine software 29 includes: conventional XML parser software; event handler software; screen generation engine software; and object classes. The virtual machine software 29, when executed, leads to the virtual machine 24, which, as illustrated in FIG. 2, includes: an XML parser 61; an event handler 65; a screen generation engine 67; and instances of the object classes 69. The object classes correspond to XML entities supported by the virtual machine software 29 and possibly other XML elements and attributes contained within an application definition file. Supported XML elements and attributes are detailed in Appendix "A" of previously-referenced US Patent Application Publication 2003/0060896 A9. A person of ordinary skill will readily appreciate that those XML elements and attributes identified in Appendix "A" of previously-referenced US Patent Application Publication 2003/0060896 A9 are exemplary only and may be extended or shortened as desired.

The XML parser 61 may be formed in accordance with the Document Object Model, or DOM, available at www.w3.org/DOM/, the contents of which are hereby incorporated by reference. The XML parser 61 enables the virtual machine 24 to read an application definition file. Using the XML parser 61, the virtual machine 24 may form a binary representation of the application definition file for storage at the mobile device 10, thereby eliminating the need to parse text each time an application is used. The XML parser 61 may convert each XML tag contained in the application definition file, and its associated data, to tokens, for later processing. As will become apparent, this may avoid the need to repeatedly parse the text of an application definition file.

The screen generation engine 67 orchestrates the display of initial and subsequent screens at the mobile device 10 in accordance with an application description file 28, as detailed below.

The event handler 65 allows the virtual machine 24 to react to certain external events. Example events include user interaction with presented screens or display elements, incoming messages received from a wireless network, or the like.

The object classes define objects that allow the mobile device 10 to process each of the supported XML elements and attributes. Each of the object classes includes: attributes, which are used to store attribute values defined within the XML file; and functions allowing the XML elements and attributes to be processed at the mobile device, as detailed in Appendix "A" of previously-referenced US Patent Application Publication 2003/0060896 A9, for each supported XML entity. So, as should be apparent, supported XML elements and attributes are extensible. The virtual machine software 29 may be expanded to support XML elements and attributes not detailed in Appendix "A" of previously-referenced US Patent Application Publication 2003/0060896 A9. Corresponding object classes could be added to the virtual machine software 29.

As detailed below, upon invocation of a particular application at the mobile device 10, the virtual machine 24 presents an initial screen on the user interface 18 based on the contents of the application definition file 28. Screen elements are created by the screen generation engine 67 by creating instances 69 of corresponding object classes for defined elements. The object class instances 69 are created using attributes contained in the application definition file 28. Thereafter the event handler 65 of the virtual machine 24 reacts to events for the application. Again, the event handler 65 consults the contents of the application definition file 28 for the application in order to properly react to events. Events may be reacted to by creating instances of associated "action" objects from the object classes.

Similarly, the object classes of the virtual machine software 29 further include object classes corresponding to data tables and network transactions defined in the Table Definition and Package Definition sections of Appendix "A" of previously-referenced US Patent Application Publication 2003/0060896 A9. At run time, instances 69 of object classes corresponding to these classes are created and populated with parameters contained within the application definition file 28, as required.

Using this general description, persons of ordinary skill in the art will be able to form the virtual machine software 29 for any particular device. Typically, the virtual machine software 29 may be formed using conventional object oriented programming techniques and existing device libraries and APIs, as to function as detailed herein. As will be appreciated, the particular format of the screen generation engine 67 and the object classes 69 will vary depending on the type of virtual machine software 29 the device operating system and the APIs available at the device. Once formed, a machine executable version of the virtual machine software 29 may be loaded and stored at the mobile device 10, using conventional techniques. The machine executable version of the virtual machine software can be embedded in ROM, loaded into RAM over a network or loaded into RAM from a computer readable medium. Although, in the preferred embodiment the virtual machine software 29 is formed using object oriented structures, persons of ordinary skill will readily appreciate that other approaches could be used to form suitable virtual machine software 29. For example, the object classes forming part of the virtual machine software 29 could be replaced by equivalent functions, data structures or subroutines formed using a conventional (i.e., non-object oriented) programming environment. Operation of the virtual machine 24 while consulting an application definition file 28 containing various XML definitions, is further detailed below.

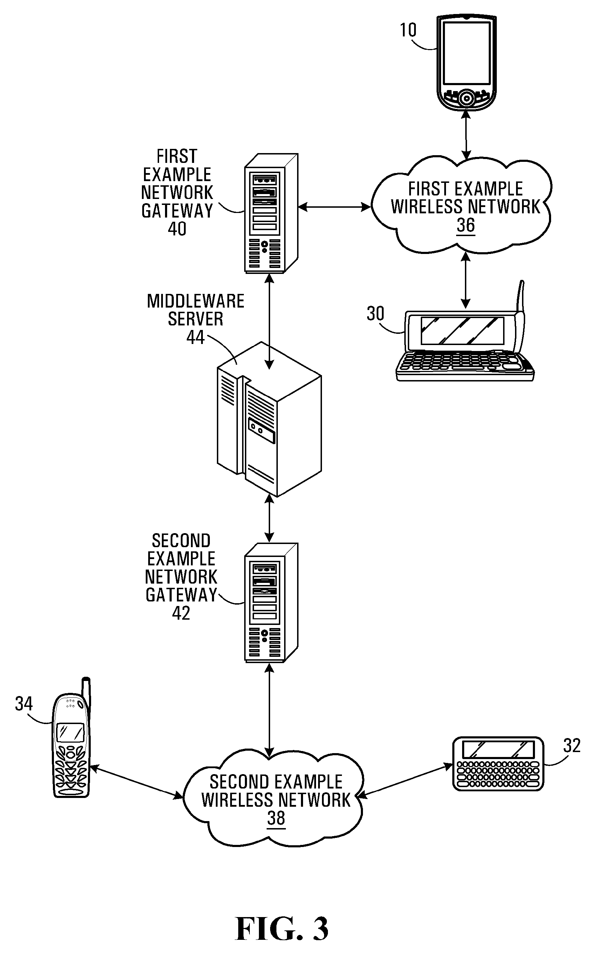

FIG. 3 illustrates the operating environment for the first example mobile device 10. Further example mobile devices, including a second example mobile device 30, a third example mobile device 32 and a fourth example mobile device 34 are also illustrated in FIG. 3. These further example mobile devices 30, 32 and 34 are similar to the first example mobile device 10 and also store and execute exemplary virtual machine software.

Virtual machines, like the virtual machine 24 executed at the first example mobile device 10, execute on each of the further example mobile devices 30, 32, 34, and communicate with a middleware server 44 by way of a first example wireless network 36, a second example wireless network 38, a first example network gateway 40 and a second example network gateway 42. The example gateways 40, 42 are generally available as a service for those people wishing to have data access to wireless networks. An example network gateway is available from Broadbeam Corporation, of Cranbury, NJ, in association with the trademark SystemsGo!. The wireless networks 36, 38 are further connected to one or more computer data networks, such as the Internet and/or private data networks by way of the example gateways 40, 42. As will be appreciated, different embodiments may work with many types of wireless networks. The middleware server 44 is, in turn, in communication with a data network that is in communication with the example wireless networks 36, 38. The communication protocol used for such communication may be TCP/IP over an HTTP transport. As could be appreciated, other network protocols such as X.25 or SNA could equally be used for this purpose.

The mobile devices 10, 30, 32, 34 communicate with the middleware server 44 in two ways. First, the virtual machine 24 at each device may query the middleware server 44 for a list of applications of which a user of an associated mobile device 10, 30, 32, 34 can make use. If a user decides to use a particular application, the corresponding mobile device 10, 30, 32, 34 can download a text description, in the form of an application definition file 28, for the particular application from the middleware server 44 over its wireless interface. As noted, the text description is preferably formatted using XML. Second, the virtual machine at each device may send, receive, present and locally store data related to the execution of applications, or its own internal operations. The format of exchanged data for each application is defined by the application definition file. Again, the exchanged data is preferably formatted using XML in accordance with the application definition file.

The middleware server 44, in turn, stores text application definition files 28 for those applications that have been enabled to work with the various mobile devices 10, 30, 32, 34 in a pre-defined format understood by the corresponding virtual machines. Software providing the functions of the middleware server 44 in the exemplary embodiment is written in Delphi and uses an SQL Server database.

As noted, text files defining application definitions and data can be formatted in XML. For example, XML version 1.0, detailed in the XML version 1.0 specification second edition, dated October 6, 2000 and available at the internet address www.w3.org/TR/2000/REC-xml-2000- 1006, the contents of which are hereby incorporated herein by reference, may be used. However, as will be appreciated by those of ordinary skill in the art, the functionality of storing XML description files is not dependent on the use of any given programming language or database system.

Each application definition file 28 is formatted according to defined rules and uses pre-determined XML markup tags, known to both the virtual machine 24 executed at the mobile device and the complementary server software executed at the middleware server 44. Tags define XML entities, which are used as building blocks to present an interface to an application at a mobile device. The virtual machine 24 executed at the mobile device is pre-programmed according to these rules to be capable of processing an XML application definition file and thereafter providing an interface to an application executed at an application server, as described below. The virtual machine effectively acts as an interpreter for a given application definition file 28.

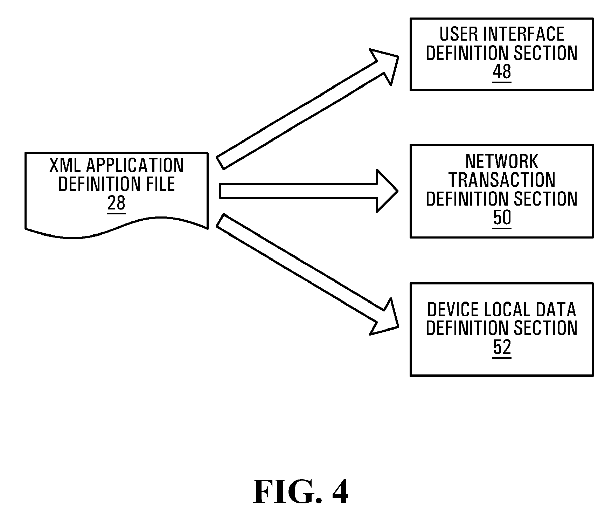

FIG. 4 illustrates an example format for an XML application definition file 28. As illustrated, the example application definition file 28 for a given mobile device and server-side application includes three components: a user interface definition section 48, specific to the user interface for the mobile device 10, that defines the format of screen or screens for the application and how the user interacts with the screens; a network transactions definition section 50 that defines the format of data to be exchanged with the application; and a local data definition section 52 that defines the format of data to be stored locally on the mobile device by the application.

Defined XML markup tags correspond to XML entities supported at a mobile device and are used to create an application definition file 28. The defined tags may broadly be classified into three categories, corresponding to the three sections 48, 50 and 52 of an application definition file 28.

Example XML tags and their corresponding significance are detailed in Appendix "A" of previously-referenced US Patent Application Publication 2003/0060896 A9. As noted above, the virtual machine software 29 at the mobile device 10 includes object classes corresponding to each of the XML tags. At run time, instances of the objects are created as required.

Broadly, the following example XML tags may be used to define the user interface:
<SCREEN> - this tag defines a screen such that a SCREEN tag pair contains the definitions of the screen elements (buttons, radio buttons and the like) and the events associated with the screen and the screen control elements;
<BTN> - this tag defines a button and attributes associated with the button;
<LIST> - this tag defines a list box;
<CHOICEBOX> - this tag defines a choice item, which allows selection of a value from predefined list;
<MENU> - the application developer will use this tag to define a menu for a given screen;
<EDITBOX> - this tag defines an edit box;
<TEXT ITEM> - this tag describes a text label that is to be displayed;
<CHECKBOX> - this tag describes a checkbox;
<HELP> - this tag defines a help topic that is used by another element on the screen;
<IMAGE> - this tag describes an image that appears on those displays that support images;
<ICON> - this tag describes an icon;
<EVENT> - this tag defines an event to be processed by the virtual machine 24 (events can be defined against the application as a whole, individual screens or individual items on a given screen; sample events include: receipt of data over the wireless interface; and an edit of text in an edit box); and
<ACTION> - this tag defines a particular action that might be associated with an event handler (sample actions include: navigating to a new window; and displaying a message box.).

The second category of example XML tags may be used in the network transaction section 50 of the application definition file 28. These may include the following example XML tags:
<TABLEUPDATE> - using this tag, the application developer can define an update that is performed to a table in the device-based local storage 26 (attributes of this tag allow the update to be performed against multiple rows in a given table at once); and
<PACKAGEFIELD> - this tag defines a field in an XML package that passes over the wireless interface.

The third category of XML tags are those used to define a logical database that may be stored in local storage 26 at the mobile device 10. These tags are used in local data definition section 52 of application definition file 28. The tags available that may be used in this section are:
<TABLE> - this tag, along with its attributes, defines a table (contained within a pair of <TABLE> tags are definitions of the fields contained in that table; the attributes of a table control such standard relational database functions as the primary key for the table); and
<FIELD> - this tag defines a field and its attributes (attributes of a field are those found in a standard relational database system, such as the data type, whether the field relates to a field in a different table, the need to index the field and so on).

The virtual machine 24 may, from time to time, need to perform certain administrative functions on behalf of a user. In order to do this, one of the object classes is associated with a repertoire of tags to communicate needs to the middleware server 44. Such tags differ from the previous three groupings in that they do not form part of an application definition file 28, but are solely used for administrative communications between the virtual machine 24 and the middleware server 44. XML packages using these tags are composed and sent due to user interactions with configuration screens of the virtual machine 24. The tags used for this include:
<REG> - this tag allows the application to register and deregister a user for use with the middleware server 44;
<FINDAPPS> - by using this tag, users can interrogate the middleware server 44 for a list of available applications;
<APPREG> - using this tag, a mobile device can register (or deregister) for an application and have the application definition file downloaded automatically (or remove the application definition file from the device-based local storage 26); and
<SETACTIVE> - using this tag, the user is allowed to identify the device that the user is currently using as the active device (if the user's preferred device is malfunctioning, or out of power or coverage, the user may need a mechanism to tell the middleware server 44 to attempt delivery to a different device).

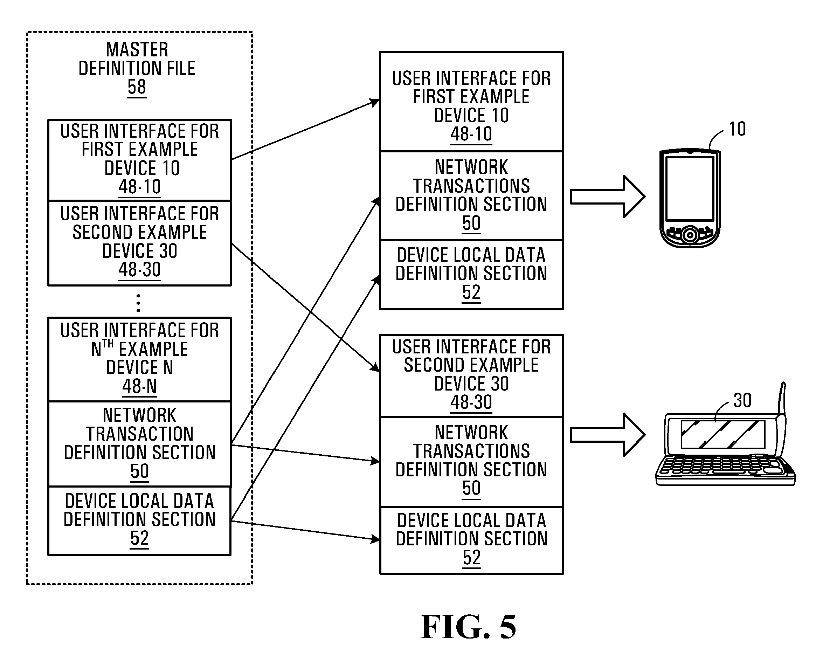

FIG. 5 illustrates the organization of application definition files 28 at the middleware server 44 and how the middleware server 44 may generate an application definition file 28 (FIG. 4) for a given one of the example mobile devices 10, 30, 32, 34. In the illustration of FIG. 5, only the first example mobile device 10 and the second example mobile device 30 are considered. Typically, since network transactions and local data are the same across devices, the only portion of the application definition file 28 that varies for different devices is the user interface definition section 48.

As such, the middleware server 44 stores a master definition file 58 for a given server-side application. This master definition file 58 contains: an example user interface definition section 48-10 for the first example mobile device 10 of FIG. 1; an example user interface definition section 48-30 for the mobile device 30 of FIG. 3; a user interface definition section 48-N for an Nth mobile device; a description of the network transactions that are possible in the network transactions definition section 50; and a definition of the data to be stored locally on the mobile device in the local data definition sections 52. Preferably, the network transactions definition section 50 and the local data definition sections 52 will be the same for all example mobile devices 10, 30,..., N, though in other embodiments, different network transactions definition sections 50 and local data definition sections 52 can be used for different devices.

For the first example mobile device 10, the middleware server 44 composes the application definition file 28 by determining the device type and adding the user interface definition section 48-10 for the first example mobile device 10 to the definition sections 50, 52 for the network transactions and the device local data. For the second example mobile device 30, the middleware server 44 composes the application definition file by adding the user interface definition section 48-30 for the second example mobile device 30 to the definition sections 50, 52 for the network transactions and the device local data.

The master definition file 58 for a given application is likely to be created away from the middleware server 44 and loaded onto the middleware server 44 by administrative staff charged with the operation of the middleware server 44. Master definition files could be created either by use of a simple text editor or by a graphical file generation tool. Such a tool might generate part or all of the file, using knowledge of the XML formatting rules, based on the user's interaction with screen painters, graphical data definition tools and the like.

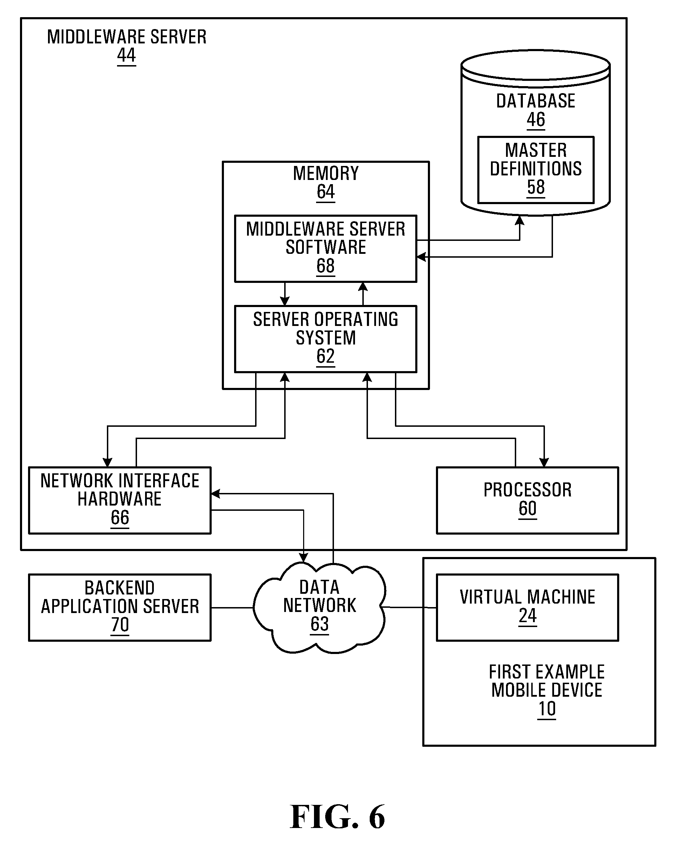

FIG. 6 illustrates the organization of middleware server 44 and associated master definition files. The middleware server 44 may be any conventional application server modified to function as described herein. As such, the middleware server 44 includes a processor 60, a network interface 66, a storage memory 64 and a server database 46. The middleware server 44 may, for example, be a Windows NT server, a Sun Solaris server, or the like. Correspondingly, the storage memory 64 of the middleware server 44 stores a server operating system 62 such as Windows NT or Solaris.

The network interface hardware 66 enables the middleware server 44 to transmit and receive data over a data network 63. Transmissions are used to communicate with both the virtual machine 24 of the first example mobile device 10, via the wireless networks 36, 38 and the wireless gateways 40, 42, and a backend application server 70, which may be considered representative of one or more application servers. The backend application server 70 may be considered both the end recipient of data received by the middleware server 44 from the mobile devices and the generator of data that is to be sent by the middleware server 44 to the mobile devices.

The storage memory 64 at the middleware server 44 further stores middleware server software 68. The middleware server software 68, when executed by the processor 60 of the middleware server 44, enables the middleware server 44 to compose and parse XML packages that are sent by and received by the middleware server 44. These XML packages may be exchanged between the middleware server 44 and the first example mobile device 10 or between the middleware server 44 and the backend application server 70.

As mentioned above, communication between the backend application server 70 and the middleware server 44 may use HTTP running on top of a standard TCP/IP stack. An HTTP connection between a running application at the backend application server 70 and the middleware server 44 may be established in response to receipt of an XML package from a mobile device. The server-side application executed at the backend application server 70 provides output to the middleware server 44 over this connection. The server-side application output may be formatted, by the server-side application, into appropriate XML packages parsable by the virtual machine 24 at the first example mobile device 10.

That is, a given server-side application (or a data interface portion of the server-side application) formats server-side application output into an XML package in a manner consistent with a format defined in the application definition file 28 for the given server-side application. Alternatively, a data interface component, separate from the server-side application, could easily be formed with an understanding of the format for output for the given server-side application. That is, with a knowledge of the format of data provided by and expected by the given server-side application at the backend application server 70, a data interface component could be a produced using techniques readily understood by those of ordinary skill. The data interface component could translate the output of the given server-side application to an XML package, as expected by the middleware server 44. Similarly, the data interface portion may translate an XML package received, via the middleware server 44, from the mobile device 10 into a format understood by the given server-side application.

The particular identity of the mobile device on which the interface to the server-side application is to be presented may be specified by a suitable identifier, contained, for example, in a header prefixed to the server-side application output XML package. This header may be used by the middleware server 44 to determine the appropriate mobile device to which to forward the XML package. Alternatively, the identity of the connection between the backend application server 70 and the middleware server 44 could be used to determine, at the middleware server 44, the appropriate mobile device to which to forward the XML package.

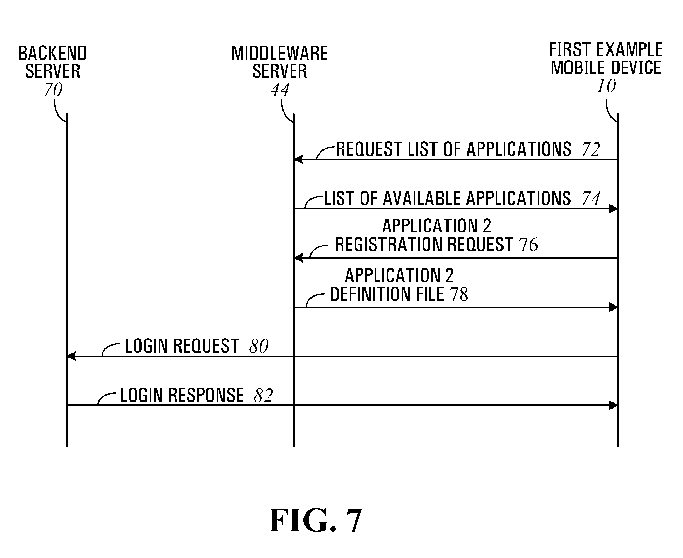

FIG. 7 illustrates a flow diagram detailing data flow (application data or application definition files 28) between the mobile device 10 and the middleware server 44.

For data requested from the middleware server 44, the mobile device 10, under software control by the virtual machine software 24, transmits requests to the middleware server 44 (see also FIG. 3), which requests pass over the first wireless network 36 to the first network gateway 40. The first network gateway 40 passes the request to the middleware server 44. The processor 60 of the middleware server 44 responds by executing a database query on the server database 46. The response to the query is an indication of the applications that are available to the user and the mobile device 10. Data representative of the indication is passed, by the middleware server 44, to the first network gateway 40. The first network gateway 40 forwards the data representative of the indication to the mobile device 10 over the first wireless network 36.

FIG. 7, when considered with FIG. 3, illustrates a sequence of communications, between the first example mobile device 10 and the middleware server 44, that may occur when the user of the mobile device 10 wishes interact with a server-side application. Accordingly, initially, the virtual machine 24 interrogates the middleware server 44 to determine the applications that are available for the first example mobile device 10. This interrogation may be initiated by the user instructing the virtual machine 24 at the first example device 10 to interrogate the middleware server 44. Responsive to these instructions, the virtual machine 24 composes an XML package requesting the list of applications. The wireless interface hardware 14 (see FIG. 1) of the mobile device 10 transmits the XML package to the middleware server 44 (data flow 72). The XML message may be composed to contain a <FINDAPPS> tag, signifying, to the middleware server 44, a desire for a list of available applications. In response, the middleware server 44 makes a query to the server database 46. The server database 46, responsive to this query, returns a list of applications that are available to the user and to the first example mobile device 10. The list is typically based, at least in part, on the type of mobile device making the request, the identity of the user of the mobile device and the applications known to the middleware server 44. The middleware server 44 converts the list into an XML list package and transmits the XML list package, including a list of available applications, to the mobile device 10 (data flow 74). Again, a suitable XML tag identifies the XML list package as containing a list of available applications.

In response to being presented with the list of available applications, a user at the first example device 10 may choose to register for an available server-side application in the list. When the user chooses to register for an application, the virtual machine 24 at the mobile device 10 composes a registration request XML package containing a registration request for the selected application. The wireless interface hardware 14 transmits the registration request XML package to the middleware server 44 (data flow 76). The registration request XML package may contain a <REG> tag. The name of the application is specified in the registration request XML package. The middleware server 44, in response to receiving the registration request XML package, queries the server database 46 for a user interface definition associated with the specified application and the first example mobile device 10. Thereafter, the middleware server 44 creates the application definition file, as detailed with reference to FIG. 5. Then, the middleware server 44 composes an XML package including the composed application definition file and transmits the XML package to the mobile device 10 (data flow 78).

The user is then able to use the functionality defined by the application definition file to send and receive data.

After receiving the XML package including the application definition file 28, the XML parser 61 of the virtual machine 24 may parse the XML text of the application definition file to form a tokenized version of the application definition file. That is, each XML tag of the application definition file may be converted to a defined token for compact storage and to minimize repeated parsing of the XML text file. The tokenized version of the application definition file may then be stored for immediate or later use by the mobile device 10. In this context, the term "tokenized" may refer to placement of the XML structure into binary objects which are run-time accessible, which is much like conversion of a script into byte code.

Thereafter, upon invocation of an interface to the particular application for which the mobile device 10 has registered, the screen generation engine 67 of the virtual machine 24 locates the definition of an initial screen for the particular application, preferably by accessing the tokenized version of the application definition file 28 if one already exists. In other embodiments, the screen generation engine 67 can call the XML parser 61 to parse and locate the relevant definition in the application definition file 28. In yet other embodiments, generation engine 67 can parse the application definition file 28 directly. The initial screen may be identified within the application definition file 28 for the particular application as corresponding to, for example, a <SCREEN> tag with an associated attribute of First screen="yes".

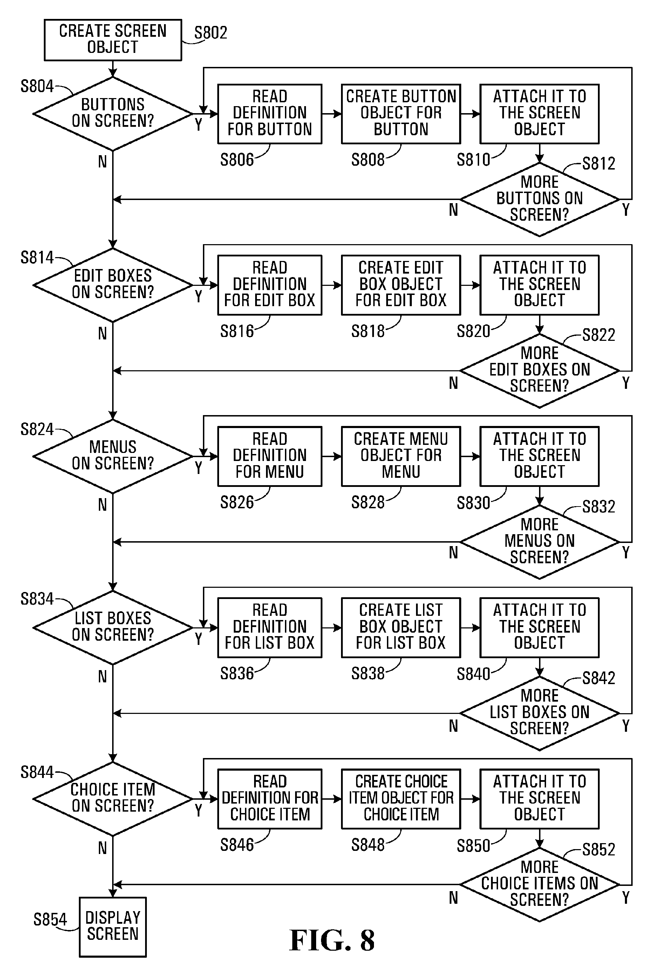

Exemplary steps performed by the virtual machine 24 in processing the initial screen (and any screen) are illustrated in FIG. 8. As illustrated, the screen generation engine 67 generates an instance of an object class, defining a screen by parsing the section of the application definition file corresponding to the <SCREEN> tag in step S802. Supported screen elements may be buttons, edit boxes, menus, list boxes and choice items, as identified in sections 5.3, 5.4 and 5.5 of Appendix "A" of previously-referenced US Patent Application Publication 2003/0060896 A9. Other screen elements, such as images and checkboxes, as detailed in Appendix "A" of previously-referenced US Patent Application Publication 2003/0060896 A9, may also be supported. However, for clarity of illustration, the processing of the other screen elements by the screen generation engine 67 is not detailed. Each supported tag under the SCREEN definition section, in turn, causes creation of instances 69 of corresponding object classes within the virtual machine 24.

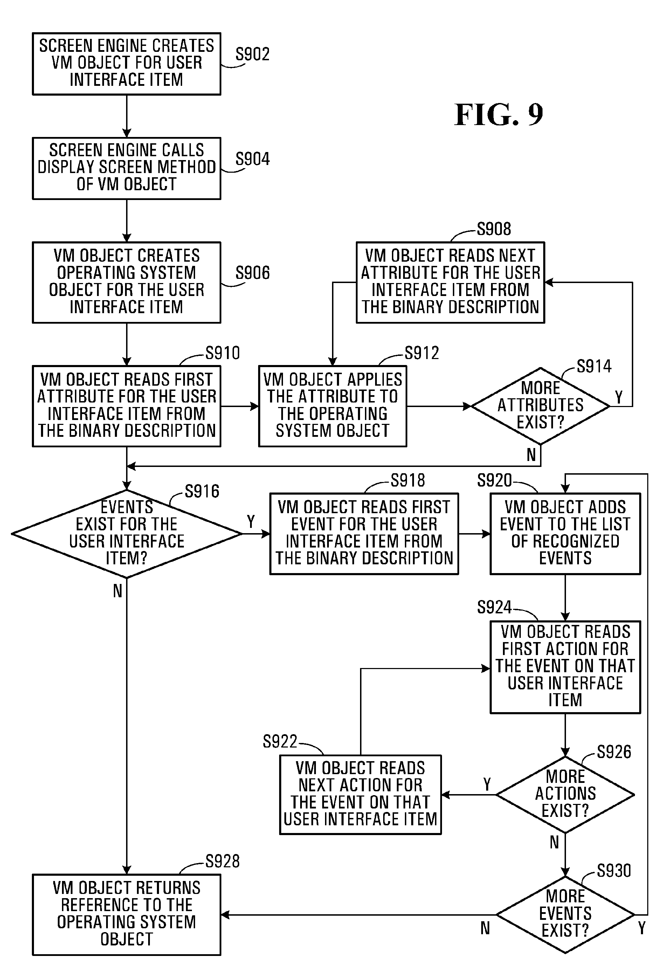

Each element definition causes the virtual machine 24 to use the operating system of the mobile device 10 to create a corresponding display element of a graphical user interface as more particularly illustrated in FIG. 9. Specifically, for each element, the associated XML definition is read in step S806, S816, S826, S836, and S846, and a corresponding instance of a screen object defined as part of the virtual machine software 29 is created by the virtual machine 24 in steps S808, S818, S828, S838 and S848, in accordance with steps S902 and onward illustrated in FIG. 9. Each interface object instance is created in step S902. Each instance takes as attribute values defined by the XML text associated with the element. A method of the object instance is further called in step S904, causing a corresponding instance of a device operating system display object to be created. Those attributes defined in the XML text file, and stored within the virtual machine object instance, are applied to the corresponding instance of the display object using the device operating system in steps S908S-S914. These steps are repeated for all attributes of the virtual machine object instance. For any element allowing user interaction, giving rise to an operating system event, the event handler 65 of the virtual machine 24 is registered to process operating system events, e.g. by passing a method pointer to the operating system representing the method (e.g. an "onEvent()" method) that should be invoked upon the occurrence of the event.

Additionally, for each event (as identified by an <EVENT> tag) and action (as identified by an <ACTION> tag) associated with each display element, the screen generation engine 67 creates an instance of a corresponding event object and action object forming part of the virtual machine 24. The virtual machine 24 maintains a list identifying each instance of each event object and each action object, which may take the form of arrays of event objects and subordinate arrays of action objects (S916 - S928).

For purposes of illustration, the following exemplary XML fragment could be read from an application definition file 28:

```
       <BTN NAME="BTN1" INDEX="1" CAPTION="OK">
           <EVENTS>
               <EVENT TYPE="ONCLICK" ...>
                   <ACTION ...>
                   <ACTION ...>
               </EVENT>
           </EVENTS>
```

The above XML fragment represents an "OK" button on a containing UI screen (not shown) which performs two actions when clicked. The details of the actions are omitted for brevity. To generate a corresponding button object 69, the following class, which is illustrated in shorthand below using a generic high-level programming language representation, may be instantiated:

```
       Public class button
       {
       str name;
       int index;
       str caption;
       event[] events; // event array
 
       fromXML(<XML>) { ... } // "constructor"
 
       writeToPersistantStorage() { ... }
 
       readFromPersistantStorage() { ... }
 
       onEvent() { ... }
 
       :
       }
```

The data members "name", "index" and "caption" of the class correspond to attributes of the same name within the XML fragment. The "constructor" method fromXML() may populate these data members with the values "BTN1", "1" and "OK", respectively, based on the relevant XML attribute values.

The constructor method may also populate the event array of the button object. The event array is an array of event objects, each representing a different type of event that is significant with regard to the containing UI construct (in this case, the button object). In the above example, only one significant event is defined for the "OK" button, namely, an "ONCLICK" event which represents the clicking of the button. Accordingly, only one event object is instantiated. The event object's data members may include an array of two action objects (one for each action element in the above XML fragment) representing actions to be taken when the event occurs. Each action object may also be populated by a constructor method within the action object, in like fashion.

Steps S902-S930 are repeated for each element of the screen in steps S808, S818, S828, S838 and S848 as illustrated in FIG. 8, and are "attached to" (e.g. form data members within) the screen object (S810, S820, S830, S840, S850). All elements between the <SCREEN> definition tags are so processed (S812, S822, S832, S842, S852). After the entire screen has been so created in memory, it is displayed in step S854, using conventional techniques.

As will be appreciated, objects are specific to the type of device executing the virtual machine software. As mentioned above, object instances created as a result of the XML description can support event handling. This event handling is processed by the event handler 65 of the virtual machine 24 in accordance with the application definition file 28. Similarly, receipt of data from a mobile network will give rise to events. The event handler 65, associated with a particular application presented at the device, similarly processes incoming messages for that particular application. In response to the events, the onEvent() methods of event objects and "onAction()" methods of action objects are invoked, in accordance with the hierarchical XML definitions contained within the application definition file 28, resulting in the desired application behaviour, which may include changing screens, retreiving or storing data in local storage 26, or sending messages (XML packages) to middleware server 44.

As noted, the virtual machine software 29 includes object classes, allowing the virtual machine 24 to create object instances corresponding to an <EVENT> tag and any subordinate tags (e.g. <ACTION> tags). The object classes include methods specific to the mobile device, such that even though the XML elements specified in the application definition file 28 are the same for all device types, the code executed at the present device will achieve the desired behaviour for that type of device.

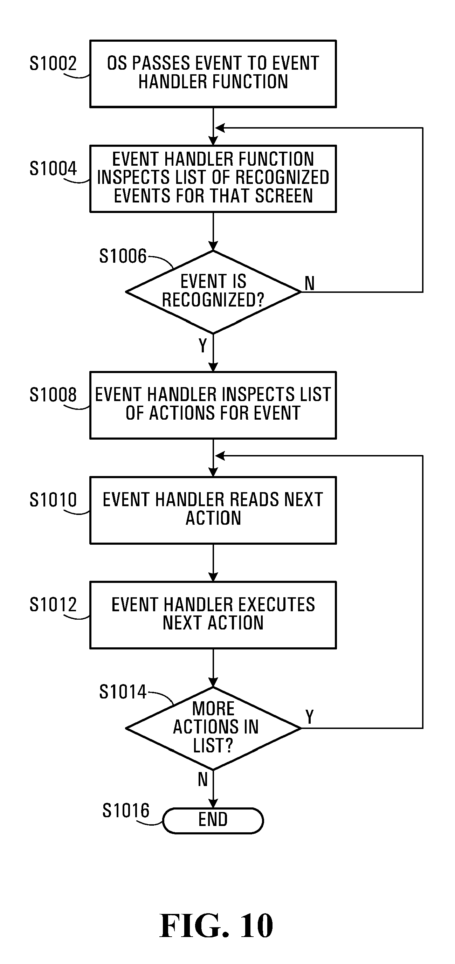

Events may be handled by the virtual machine 24 as illustrated in FIG. 10. Specifically, as the event handler 65 has been registered with the operating system for created objects, upon occurrence of an event, steps S1002 and onward are performed in response to the operating system detecting an event.

An identifier of the event is passed to the event handler 65 in step S1002. In steps S1004-S1008, this identifier is compared to the known list of events, created as a result of steps S916-S930. For an identified event, actions associated with that event are processed in step S1008-S1014. That is, the virtual machine 24 performs the action defined in the <ACTION> tag associated with the <EVENT> tag corresponding to the event giving rise to processing by the event handler 65. The <ACTION> may cause creation of a new screen, as defined by a screen tag, a network transmission, a local storage, or the like.

New screens, in turn, are created by invocation of the screen generation engine 67, as detailed in FIGS. 8 and 9. In this manner, the navigation through the screens of the application is accomplished according to the definition embodied in the application definition file.

Similarly, when the user wishes to communicate with the middleware server 44, or store data locally, instances 69 of corresponding object classes of the virtual machine software 29 are created and methods of the instances 69 are invoked to transmit the data, or store the data locally, using the local device operating system 20. The format of the data stored locally is defined by the local data definition section 52; the format of XML packages transmitted or received is defined in the network transaction package definition section 50.

For example, data that is to be sent to the wireless network is assembled into XML packages using methods of an instance of an XML builder object. Methods defined in as part of the XML builder object allow creation of a full XML package before passing the completed XML package to an instance of a message server object. The message server object instance uses the device's network APIs to transmit the completed XML package across the wireless network.

XML packages received from the data network 63 (FIG. 6) give rise to events processed by the event handler 65. Processing of the receipt of XML packages is not specifically illustrated in FIG. 9. However, the receipt of a XML package triggers a "data" event recognized by the device operating system 20 (see FIG. 1). This data event is passed to the virtual machine 24 and the event handler 65 inspects the received XML package. As long as the data received is a valid XML data package as contained within the application definition file, the virtual machine 24 inspects the list of recognized XML entities.

So, for example, a user could trigger the transmission of a login request (data flow 80, FIG. 7) by interacting with an initial login screen, defined in the application definition file for the application. The login request (data flow 80) would be passed by the middleware server 44 to the backend application server 70. The backend application server 70, according to the logic embedded within its application, would return a login response (data flow 82), which the middleware server 44 would pass to the virtual machine 24. Other applications, running on the same or other application servers might involve different interactions, the nature of such interactions being solely dependent on the functionality and logic embedded within the backend application server 70 and remaining independent of the middleware server 44.

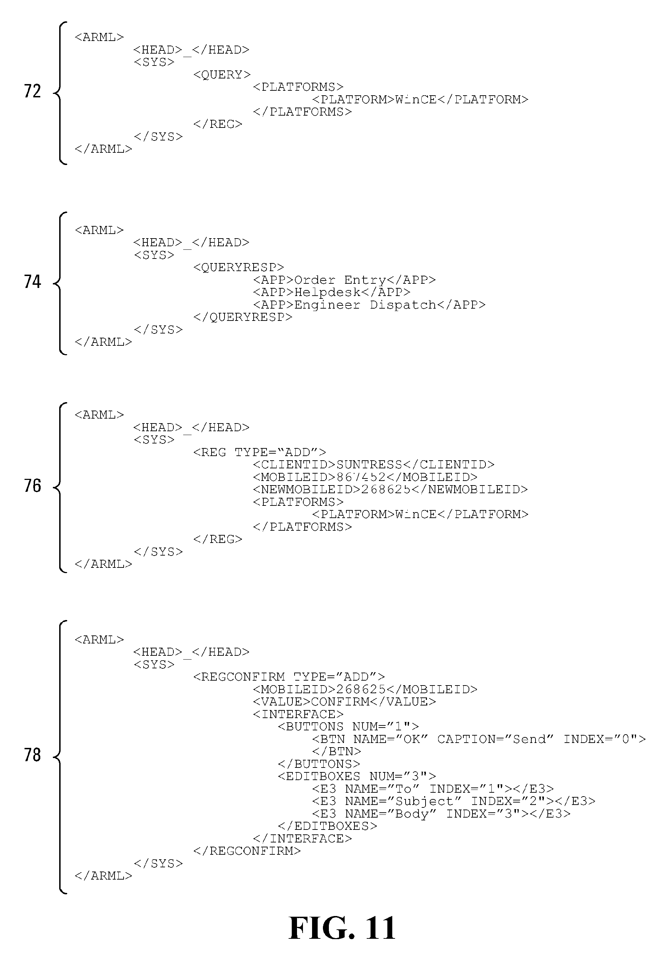

FIG. 11 illustrates example XML messages passed as part of the message flows illustrated in FIG. 7. For each message, the header portion, i.e., the portion enveloped by the <HEAD></HEAD> tag pair, is considered to contain a timestamp and an identifier of the sending device.

A first example message 72 is representative of a message sent by the mobile device 10 to request the list of applications that the middleware server 44 has available to that user on that device. The first example message 72 specifies a type for the mobile device 10 using text contained by the <PLATFORM></PLATFORM> tag pair. A second example message 74 is representative of a message sent, to the mobile device 10 by the middleware server 44, in response to the first example message 72. The second example message 74 contains a set of <APP></APP> tag pairs, each tag pair enveloping an identity of a single application that is available to the user at the mobile device 10. A third example message 76 is representative of a message sent from the mobile device 10 to the middleware server 44 to request registration for a single server-side application. The tags specify information about the user and the mobile device 10. A fourth example message 78 is representative of a message sent, to the mobile device 10 by the middleware server 44, in response to the third example (registration request) message 76. The <VALUE></VALUE> tag pair envelope a code indicating success or failure. In the fourth example message 78 shown, a success is indicated by "CONFIRM" and is followed by an interface description for the application enveloped by the <INTERFACE></INTERFACE> tag pair. This interface description may then be stored locally within the storage memory 16 of the mobile device 10.

As noted, when a user starts an interface to an application, an application definition file for which has been downloaded in the manner described above, the virtual machine 24 reads the interface description section of the application definition file. The virtual machine 24 identifies the screen that should be displayed on startup and displays the elements of the screen as detailed in relation to FIGS. 9 and 10. The user may then use the functionality defined by the application definition file to send XML packages to, and receive XML packages from, the associated backend application server via the middleware server 44.

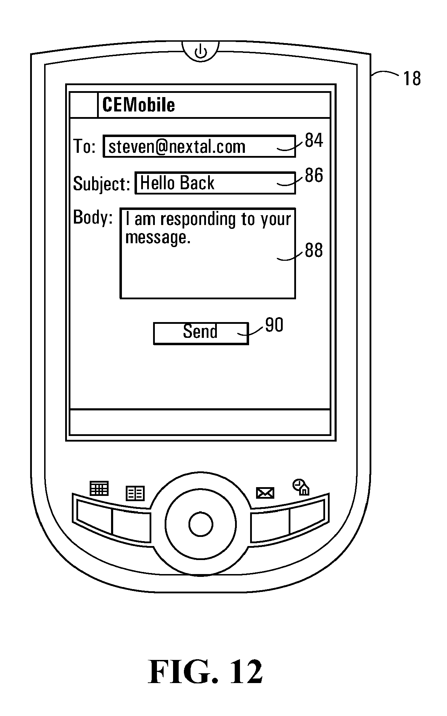

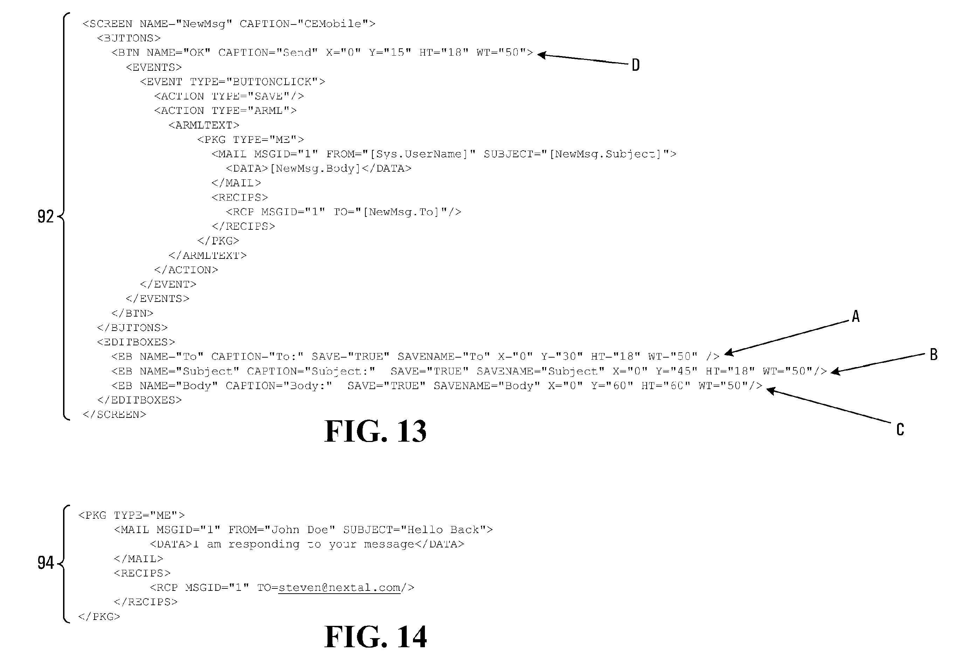

For the purposes of illustration, FIGS. 12 and 13 illustrate the presentation of a user interface for a sample screen on a Windows CE Portable Digital Assistant. As illustrated in FIG. 13, a first XML portion 92 of the application definition file 28 is an interface description for a screen with the name "NewMsg". This interface description may be contained within the user interface definition section 48 of the application definition file 28 associated with the server-side application. The screen is defined to have a single button identified by a <BTN> tag, which is identified as item D in FIG. 13, with attributes NAME="OK", CAPTION="Send", INDEX="0", X="0", Y="15", HT="18" and WT= "50". This button gives rise to a single event (identified by the <EVENTS> tag) that has two associated actions: one defined by the <ACTION> tag with attribute TYPE ="SAVE"; and one defined by the <ACTION> tag with attribute TYPE ="ARML". The latter action results in the generation of an XML package (defined by the <PKG> tag with attribute TYPE="ME"), which has a data format as defined enveloped by the <PKG></PKG> tag pair. The package is defined to begin with a <MAIL> TAG with attributes MSGID, FROM and SUBJECT. Additionally, the interface description for the screen includes definitions for three edit boxes, as enveloped by the <EDITBOXES></EDITBOXES> tag pair. The definitions for the three edit boxes are identified in FIG. 13 as lines of XML code labeled A, B and C.

Upon invocation of the interface to the server-side application at the mobile device 10, the screen generation engine 67 of the virtual machine 24 processes the interface definition for the screen, as detailed with reference to FIGS. 8 and 9. That is, for XML tag D, the screen generation engine 67 creates a button object instance in accordance with steps S804-S812. Similarly for XML tag pairs A, B and C within the application definition file 28, the virtual machine 24 creates instances of edit box objects (i.e., steps S834-S842, see FIGS. 8 and 9). The data contained within the object instances reflects the attributes of the relevant button and edit box tags, contained in the application definition file 28 associated with the server-side application.

The resulting screen presented by the user interface 18 of the mobile device 10 is illustrated in FIG. 12. The user interface 18 depicts a screen called "NewMsg", which uses interface items that provide a user with an ability to compose and send data. The screen illustrated in FIG. 12 has an edit box named "To" 84 corresponding to XML tag pair A in FIG. 13, an edit box named "Subject" 86 corresponding to XML tag pair B in FIG. 13 and an edit box named "Body" 88 corresponding to XML tag pair C in FIG. 13. The screen illustrated in FIG. 12 also incorporates a button named "OK" 90 corresponding to XML tag D in FIG. 13.

Call-backs associated with the OK button 90 cause graphical user interface application software, as part of the operating system at the mobile device 10, to return control to the event handler 65 of the virtual machine 24. Thus, as the user interacts with the user interface 18, the user may input data within the presented screen using the mobile device API. Once data is to be exchanged with the middleware server 44, the user may press the OK button 90 and, by doing so, invoke an event, which is initially handled by the operating system of the mobile device 10. However, during the creation of the OK button 90, in steps S804-S810, any call-back associated with the button was registered to be handled by the event handler 65 of the virtual machine 24. Upon completion, the virtual machine 24 receives data corresponding to the user's interaction with the user interface 18 and packages this data into an XML package using corresponding objects. The XML package is populated according to the rules within the application definition file 28.

The event handler 65, in turn, processes the event caused by user interaction with the OK button 90 in accordance with the <EVENT> tag and corresponding <ACTION> tag associated with the <BTN> tag, referenced as XML tag D, associated with the OK button 90. The events, and associated actions, are listed as data items associated with the relevant user interface item within the application definition file 28. The <ACTION> tag causes the virtual machine 24 to create an instance of an object that forms an XML package for transmission to the middleware server 44 in accordance with the format defined within the <ACTION></ACTION> tag pair. That is, a "template" (defined beginning with the <PKG> tag with attribute TYPE="ME") for the XML package to be sent is defined within the <EVENT></EVENT> tag pair for a given user interface item. This template specifies the format of the XML package to be sent and may include certain variable fields. The variable fields in the formatted XML package take on contents that vary according to the values received in data entry fields on the current and previous screens. The definition of the template specifies which data entry field should be interrogated to populate a given variable field within the XML package that is to be sent.

According to the template, some of the variable fields of the XML package are filled dynamically from data inserted by the user into edit boxes presented on the display of the mobile device 10. The template includes placeholders delimited by square brackets, i.e., "[" and "]". These placeholders reference a data source from which data for filling the corresponding section of the template should be obtained. A suitable data source might be a user interface field on the current screen, a user interface field on a previous screen or a table in a device-based logical database. The virtual machine 24, after reading the data source name, searches for the field corresponding to the referenced data source and replaces the placeholder with data contained within the named field. For example, the SUBJECT attribute of the <MAIL> tag in the first XML portion 92 references [NewMsg.Subject]. As such, content for the SUBJECT attribute may be read from the edit box (field) named "Subject" on the screen named "NewMsg". This process is repeated for each such placeholder, until the virtual machine 24, reading through the template, has replaced all placeholders in the template with content to form an XML package.

An exemplary XML package 94, containing data obtained as a result of input provided to the fields of the "NewMsg" screen, is illustrated in FIG. 14. The exemplary XML package 94 may have been created responsive to user interaction with the "NewMsg" screen, which user interaction may be considered to have been culminated by interaction with the OK button 90 (see FIG. 12) corresponding to XML tag D in the first XML portion 92. In this case, the user has entered: the text "steven@nextair.com" into the edit box named "To" 84; the text "Hello Back" into the edit box named "Subject" 86; and the text "I am responding to your message" into the edit box named "Body" 88.

The virtual machine 24, using the template, inspects these three edit boxes and places the text contained within each edit box in the appropriate position in the template. For example, the placeholder [NewMsg.Subject] is replaced by "Hello Back". The virtual machine 24 creates the exemplary XML package 94 by invoking functionality embedded within an XML builder software object to populate the variable fields of the template contained in the first XML portion 92. Once the exemplary XML package 94 has been assembled in this fashion, a relevant method of the message server object is invoked to transmit the exemplary XML package 94 across the network.

When an XML package is received from the network 22 or another process, the event handler 65 of the virtual machine 24 is notified. In response, the virtual machine 24 invokes the XML parser 61 to build a list of name value pairs contained within the received XML package. Thereafter, methods within an object class for processing incoming XML packages are invoked that allow the virtual machine 24 to inspect the XML package to determine a server-side application to associate with the XML package and select a corresponding application definition file. The methods within the object class for processing incoming XML packages also allow the virtual machine 24 to inspect the application definition file to identify the fields in the device-based logical database and the user interface screens that may need to be updated with new data received in the XML package. In the case wherein the user interface screens are updated, such updating may be accomplished according to the procedures normal to the particular device.

Handling of incoming XML packages is defined in the application definition file 28. That is, for each of the possible XML packages that can be received, the application definition file 28 includes definitions of device-based logical database tables and screen items that should be updated, as well as which section of the package updates which device-based logical database table or screen item. After an XML package has been received, the event handler 65 uses rules based on the application definition file 28 to identify which device-based logical database tables or screen items need to be updated.

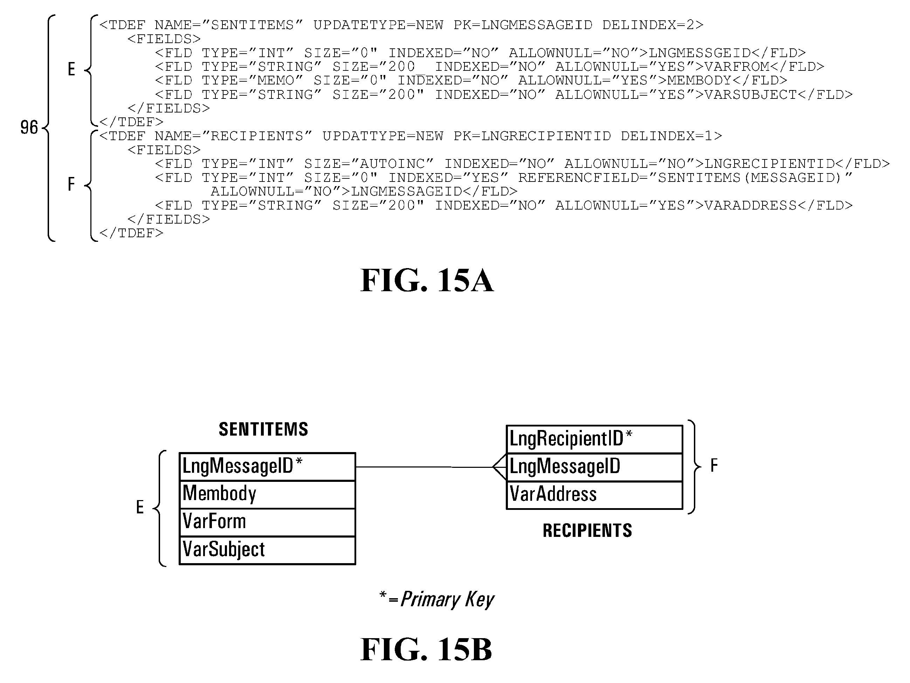

FIGS. 15A-15C illustrate how the format of the logical database in the local storage 26 on the mobile device 10, and the XML packages that update the logical database, whether these packages are being sent or received, are defined in the application definition file 28. A second XML portion 96 of the application definition file 28, illustrated in FIG. 15A, forms part of the local data definition section 52 (see FIG. 4). The second XML portion 96 defines an example format for a portion of the logical database related to the e-mail application interface described with reference to FIGS. 12 and 13.

Two example tables are defined in the second XML portion 96 of FIG. 15A for formatting the logical database for the e-mail application. A first XML item E of the second XML portion 96 corresponds to a first table, labeled "SENTITEMS" in FIG. 15B. A second XML item F of the second XML portion 96 corresponds to a second table, labeled "RECIPIENTS" in FIG. 15B. The first table stores details of sent e-mail messages and has four fields. The second table stores recipients of sent e-mail messages and has three fields.

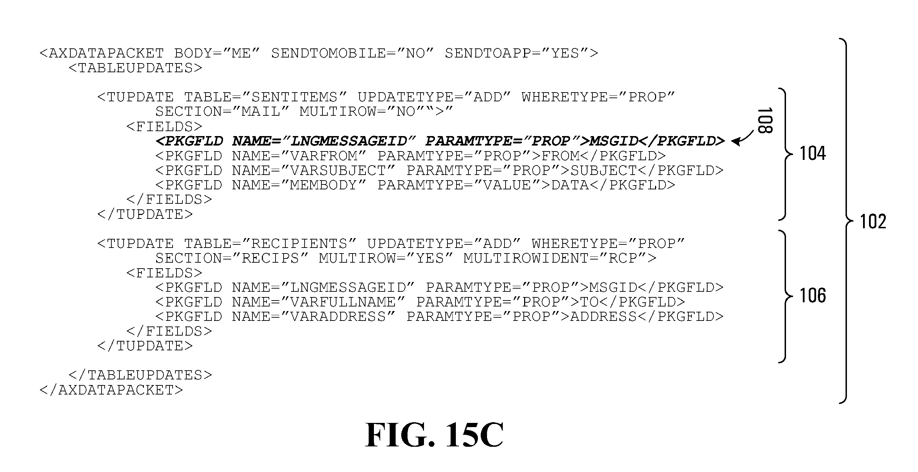

FIGS. 15A and 15B illustrate the use of the local storage 26 to store data related to XML packages that are sent and received. Specifically, the first table, defined by the first XML item E in FIG. 15A, may store the e-mail message contained in the exemplary XML package 94, shown in FIG. 14. Accordingly, the application definition file 28 for the e-mail application may be required to contain, along with the first XML portion 92 and the second XML portion 96, a third XML portion 102, illustrated in FIG. 15C, which forms part of network transaction package definition 50 (Fig. 4). The third XML portion 102 defines how the data packages, composed according to the template included in the first XML portion 92 (see FIG. 13), lead to updates of the tables defined by the second XML portion 96.

The third XML portion 102 includes a first section 104 and a second section 106. The first section 104 defines how fields of a received XML package may be used to update the first table of FIG. 15B. An exemplary received XML package may be as follows:

```
 {wrapper tags}
 <PKG TYPE="ME">
       <MAIL MSGID="1" FROM="Tim Neil"
              FROMADDRESS="timn@nextair.com"
              SUBJECT="Hello Back">
       <DATA>I am responding to your message</DATA>
       </MAIL>
       <RECIPS>
       <RCP MSGID="1" TO="Jeff Jones"
              ADDRESS="jeff@nextair.com"></RCP>
       <RCP MSGID="1" TO="Scott Neil"
              ADDRESS="scottn@nextair.com"></RCP>
       <RCP MSGID="1" TO="Steve Hulaj"
              ADDRESS="steveh@nextair.com"></RCP>
       </RECIPS>
 </PKG>
 {wrapper tags}
```

An example line 108 (FIG. 15C) defines how the "MSGID" field of the received XML package may be used to update a field named "LNGMESSAGEID" in the first table of FIG. 15B. Similarly, the second section 106 defines how the fields of the received XML package may be used to update fields of the second table of FIG. 15B.

The third XML portion 102 is contained by an <AXDATAPACKET></AXDATAPACKET> tag pair. Attributes of the <AXDATAPACKET> tag provide rules that instruct the virtual machine 24 as to whether data contained within an XML package of a given XML package type should be used to update tables in the device-based logical database. These rules may be applied whenever an XML package of the given XML package type is sent or received.

As can be seen from the preceding description and example, such an approach has significant advantages over traditional methods of deploying applications onto mobile devices. First, the definition of an application's functionality is separated from the details associated with implementing such functionality, thereby allowing the implementers of a mobile application to concentrate on the functionality and ignore implementation details. Second, application definition files can be downloaded wirelessly, wherever the device happens to be at the time at which the functionality is required. This greatly improves the usefulness of the mobile device, by removing reliance on returning the device to a cradle and running a complex installation program. Third, the use of application definition files allows flexible definitions for numerous applications. Server-side applications may be easily ported to a number of device types.

While executing a particular application described by an application definition file, the virtual machine 24 may, under circumstances described above, execute instructions to generate a message for transmission to the middleware server 44. The virtual machine 24 may then store the generated message to an outbound message queue. As is known in the art, the outbound message queue may be implemented as a "queue table" in a relational database, say, in the memory 16 or local storage 26. Relational databases may be structured to include tables, which contain records. As such, an outbound message may be stored in a Message field of a message record in the queue table.

As has been discussed above, the middleware server 44 provides an application definition file 28 to the mobile devices for use in interacting with application executed at the backend application server 70. The middleware server 44 may associate a unique integer identifier with each application for which the middleware server 44 is to handle messaging. When the middleware server 44 receives a message from the backend application server 70 that is directed to the mobile device 10, the middleware server 44 may reformat the message and add a header to the message. The message header may include the unique integer identifier associated with the application, which in the present embodiment is the same for any device 10 or 30 executing the application.

For each application for which an application definition file has been received by the virtual machine 24 there is a record maintained in the local storage 26 (see FIG. 1) that has the unique integer identifier of the application as well as the application name and version. Upon receiving a message from the middleware server 44, the virtual machine 24 consults the record maintained in the local storage 26 to determine the application that corresponds to the unique integer identifier in the message header. The virtual machine 24 then passes the message portion (without header) to an inbound processing module of the virtual machine 24 along with an indication of the application to which the message portion relates. The inbound processing module may then process the message portion based on the application definition file for the indicated application.

At present, when a first application executed by the virtual machine 24 according to a first application definition file instructs the generation of a new message, it is assumed that the new message is for transmission to the middleware server 44. No provisions have been made for transmission of a message to any other destination, such as, for instance, a second application executed by the virtual machine 24. In other words, no provisions have been made for Inter-Process Communication (IPC).

In overview, IPC may be provided in applications executed by the virtual machine 24 based on application definition files. It is proposed herein to provide an indication to the instance of the message transmission object that a given message stored in the queue table is to be passed to a second application executed by the virtual machine 24. Advantageously, a new field, a "LocalApp" field, may be defined for the message record, where the LocalApp field is arranged for storage of an indication of a destination application for the message stored in the Message field of the message record.

In conjunction with storing a given message in the outbound message queue, the virtual machine 24 may, according to the application definition file, also store an indication of a destination application as data in the LocalApp field. Upon determining that a given message record includes data in the LocalApp field, the instance of the message transmission object may pass the contents of the Message field of the given message record to the destination application rather than to the middleware server 44.

As discussed above, an application definition file provides a user interface definition. Overall, the application definition file may define, for a particular server-side application: a user interface for controlling application functionality and display format (including display flow); the format of data to be exchanged either remotely, over the first example wireless network 36, or locally; and the format of data to be stored locally at the mobile device 10. The virtual machine 24 may use the operating system software 20 and associated application programming interfaces (APIs) to interact with elements of the mobile device 10 in accordance with the received application definition file. In this way, the mobile device 10 may present user interfaces for a variety of applications executed at a variety of remote application servers.

While creating an application definition file, a developer may have an opportunity to define a number of types of messages to be generated by the mobile device 10 and either transmitted to the middleware server 44, which messages may be ultimately destined for the backend application server 70, or passed to a local application. To implement aspects of the present embodiment at design time, a developer may specify, for a specific type of message, a local application as the destination of a queued message. Where the instance of the message transmission object considers transmission of the contents of the Message field of a message record in the queue table with a null entry in the LocalApp field, i.e., a destination is not specified, the instance of the message transmission object may transmit the queued message to a default destination, e.g., the middleware server 44.

Recall that each of the object classes may be defined to include, for each supported XML element: attributes, which may be used to store attribute values defined in the application definition file; and functions, which allow the XML element (and possibly its attributes) to be processed at the mobile device 10. As such, the developer may specify a destination local application as an attribute of an XML element in an application definition file.

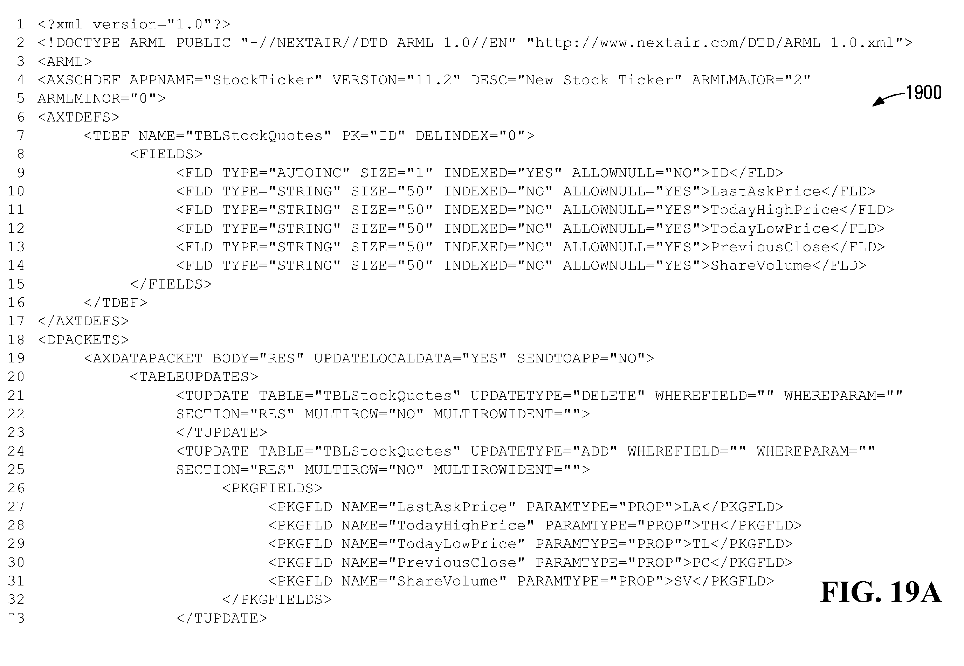

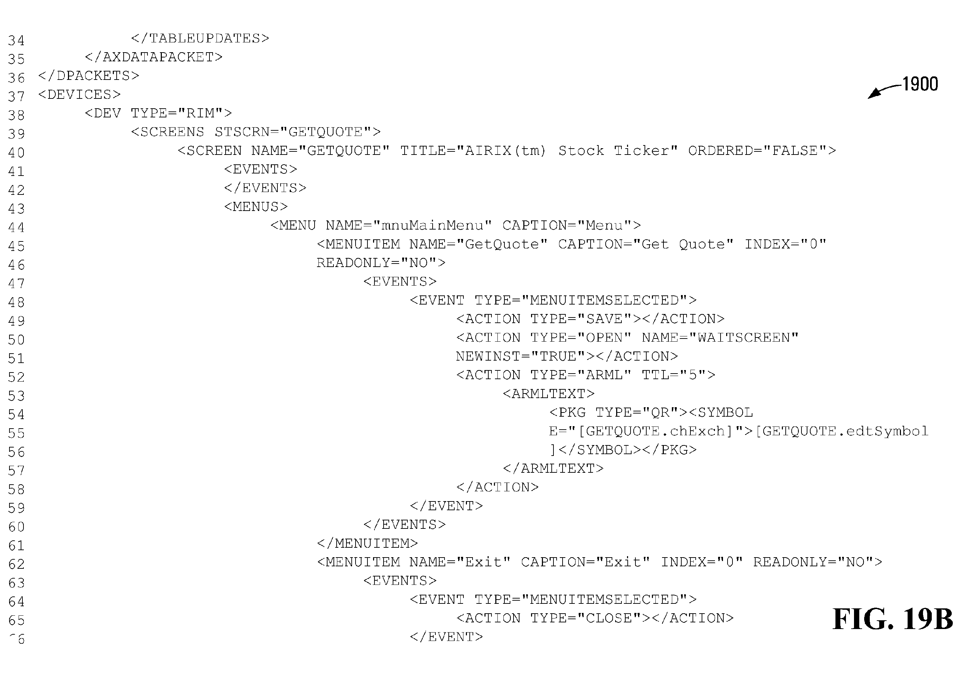

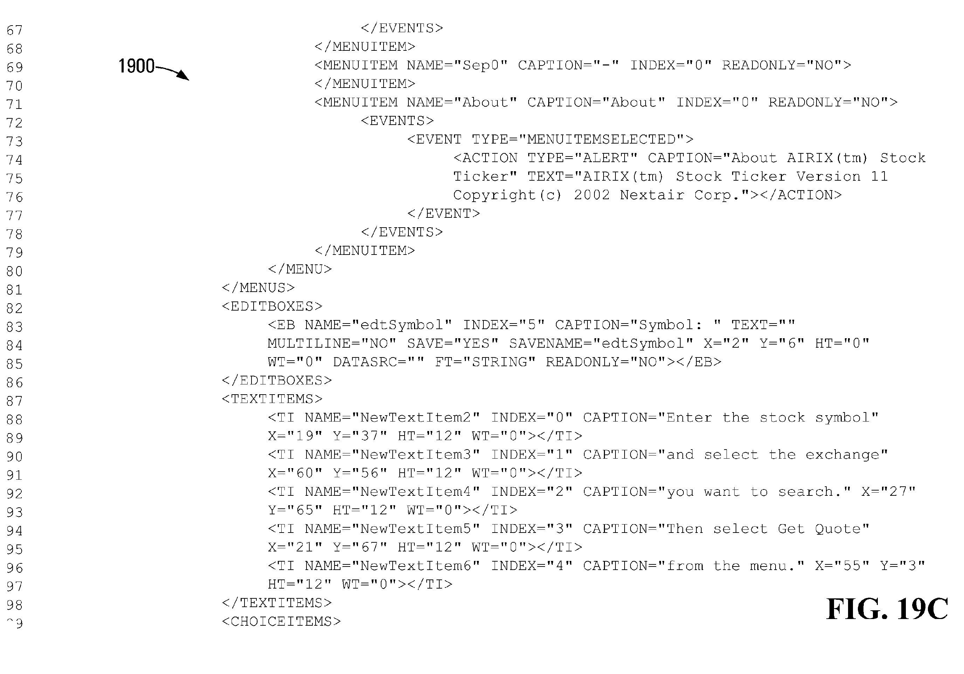

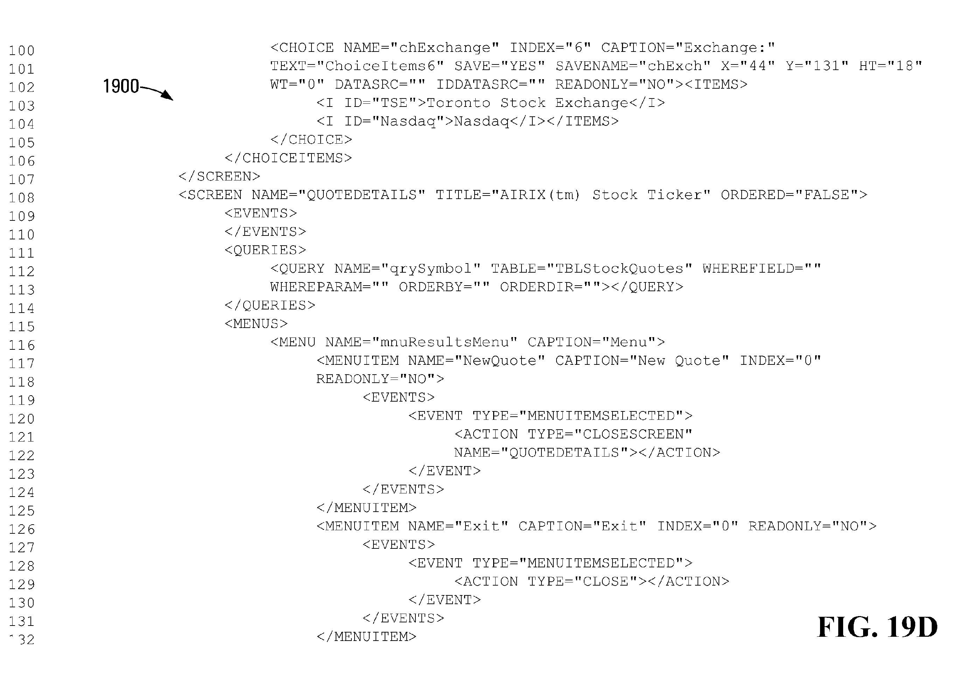

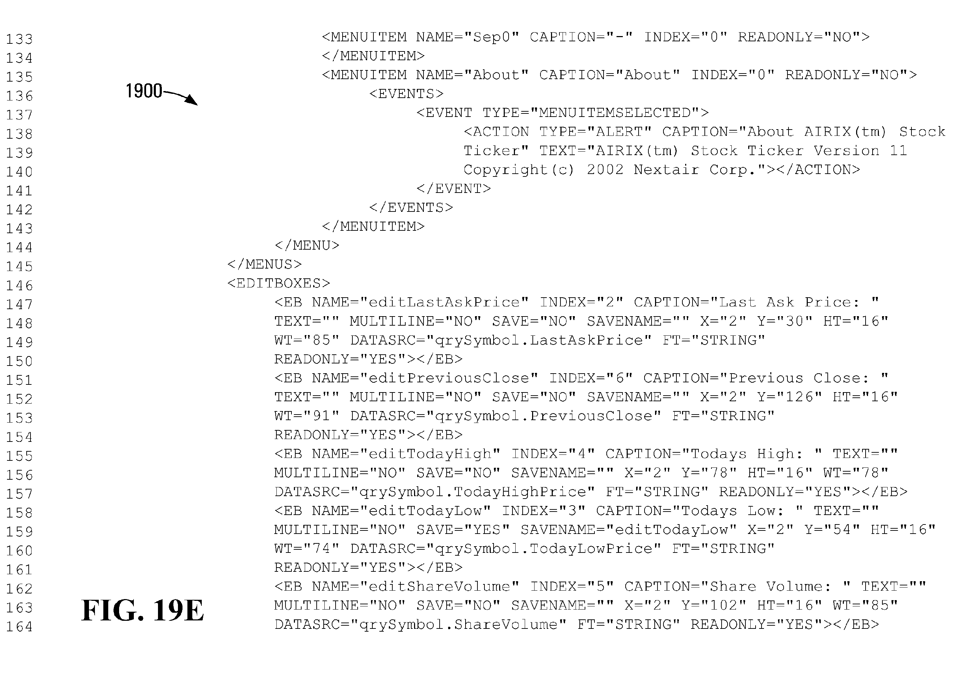

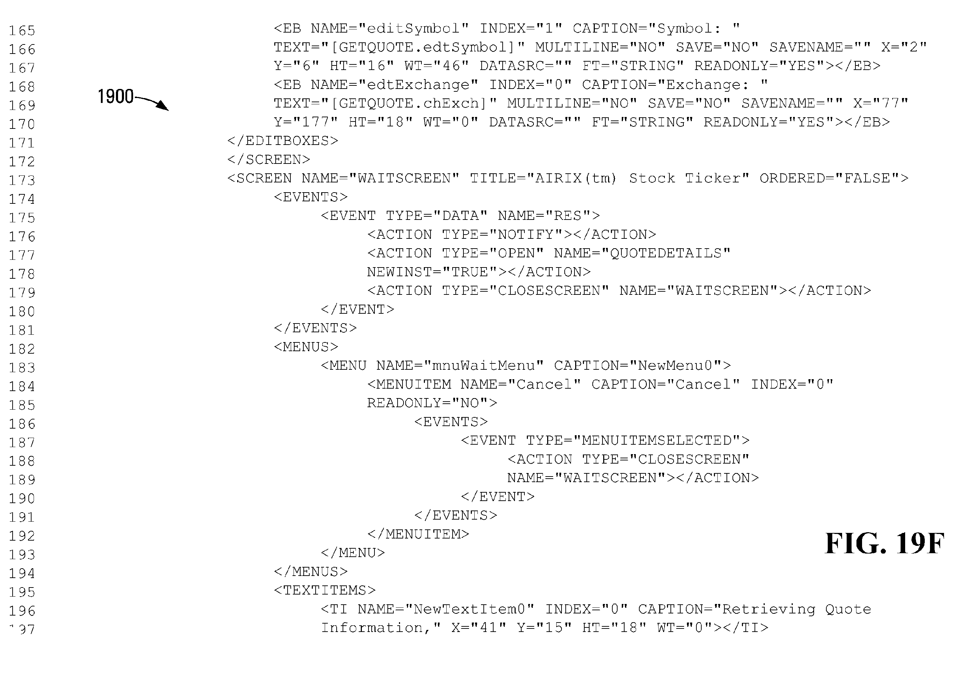

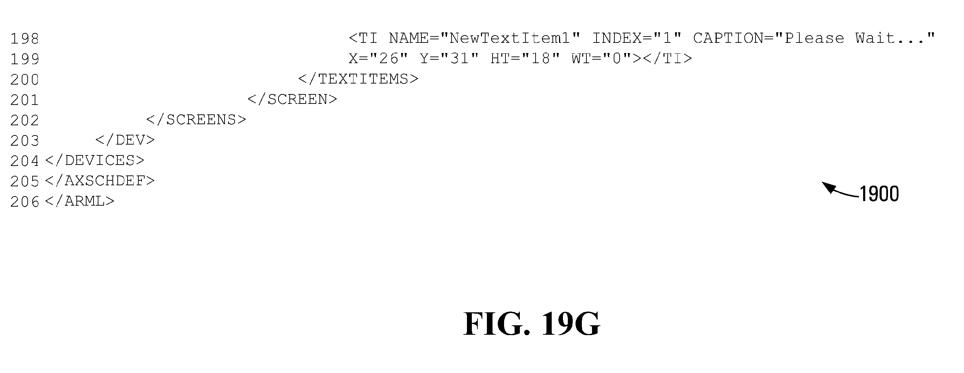

FIGS. 19A-19F of the present application provides an exemplary application definition file whose format should be familiar to those skilled in the art of developing markup language documents. At line 40 (FIG. 19B), a definition of a screen named "GETQUOTE" begins. As part of the screen definition and, further, as part of a definition of a MENU element beginning at line 44 for a menu with a NAME attribute of "mnuMainMenu", a MENUITEM element with NAME attribute "GetQuote" is defined beginning at line 45. The MENUITEM element with NAME attribute "GetQuote" includes an EVENT element with a TYPE attribute "MENUITEMSELECTED". The EVENT element with a TYPE attribute "MENUITEMSELECTED" is associated with three ACTION elements, having TYPE attributes of: "OPEN"; "SAVE"; and "ARML".

The following is a portion of a further exemplary application definition file.

```
 <BTN NAME="Map" INDEX="5" CAPTION="Send" X="80" Y="248"
 HT="21" WT="76" >
       <EVENTS>
              <EVENT TYPE="BUTTONCLICK">
                     <ACTION TYPE="ARML" LOCALAPP="Mapping"
                     LOCALAPPVERSION="1.5">
                           <ARMLTEXT>
                                  <PKG TYPE="CONTACTLOCATION">
                                         NAME="[ContactMgr.Company]"
                                         ADDRESS="[ContactMgr.Street],
                                         [ContactMgr.City],
                                         [ContactMgr.State]"/>
                                  </PKG>
                           </ARMLTEXT>
                     </ACTION>
              </EVENT>
       </EVENTS>
 </BTN>
```

According to the above application definition file portion, the XML element that defines an ACTION element with TYPE attribute "ARML" includes an attribute "LOCALAPP" whose value field is provided as "Mapping". The value field of the LOCALAPP attribute contains a label representative of a local application as a destination for the message. The ACTION element also includes an attribute "LOCALAPPVERSION" whose value field is provided as "1.5".

It is known that the local application identified in the LOCALAPP attribute will expose a message interface. That is, there will be a predefined format for messages to be received by the local application. The message interface may change from version to version or remain static. When both an application name and version are specified in an incoming message, it is expected that, to ensure that the desired interface is exposed, the inbound processing module will only provide the incoming message to an application that matches both the name and the version.

Notably, the attribute LOCALAPPVERSION may be specified as a wildcard, such as "*", meaning that any version of the local application identified in the LOCALAPP attribute may be considered valid. As such, by providing a wildcard as the value of the attribute LOCALAPPVERSION, a developer allows any version of the application to receive the message. It may be considered that providing a wildcard as the value of the attribute LOCALAPPVERSION is quite useful when there is a static message interface used across multiple versions of an application, so that inbound processing module avoids having to deal with version matching.

Alternatively, if the LOCALAPPVERSION attribute value corresponds to a version of the local application that is not found on them mobile device 10, an exception can be raised.

In operation, the mobile device 10 may receive (step 1602, FIG. 16) an application definition file that includes the above exemplary application definition file portion. The virtual machine 24 can control the presentation, on the user interface 18 of the mobile device 10, of a button displaying a caption "Map" according to the above exemplary application definition file portion. The user of the mobile device 10 can select the button such that an event of the type "BUTTONCLICK" is detected by the operating system of the mobile device 10. The operating system can indicate the detected event to the event handler 65 of the virtual machine 24. The event handler 65 can, based on the definition of the BTN element in the application definition file portion, arrange for the performance of an action, defined by an ACTION element, by the virtual machine 24.

According to the ACTION element of type ARML defined in the application definition file portion above, the event handler 65 instantiates an object class, where the object class corresponds to the ACTION element of type ARML. The object class instance then calls a message generation method to generate a message (step 1604).

The above application definition file portion provides a format, according to which the message generation method may generate the message. According to the format, the message is a PKG element delimited by <PKG></PKG> tags. The PKG element has a TYPE attribute. Within the PKG element, the message payload is a LOOKUP element. The LOOKUP element has attributes named "NAME" and "ADDRESS". The attributes reference placeholders.

The message generation method may, based on the format, add text to a string variable. As mentioned above, elements of the application definition file, including elements of the action, have been parsed by the XML parser 61. The message generation method adds successive portions of the message to the string variable, such as "<PKG TYPE="CONTACTLOCATION">", then "<LOOKUP", then "NAME="", etc. Before adding the next portion, the message generation method resolves the placeholder "[ContactMgr.Company]" and adds the text to which the placeholder resolves. In an exemplary resolution of a placeholder, the user has inserted the text "ABC Company" in the Company edit box on an interface screen. The text "ABC Company" has then been stored in the Company field of a ContactMgr record in the local storage 26, the message generation method may read the contents of the field and add the text "ABC Company" to the string variable.

An exemplary message generated according to message format provided in the above exemplary application definition file portion may appear as follows:

```
 <PKG TYPE="CONTACTLOCATION">
       <LOOKUP NAME="ABC Company" ADDRESS="123 John St.,
       Toronto, OH" />
 </PKG>
```

When the string variable contains the entire message, that is, the message generation method has added the text "</PKG>" to the string variable, the virtual machine 24 may then call a destination indication generation method of the object class instance to generate an indication (step 1606) of the local application that is to be the destination of the exemplary message.

The virtual machine 24 may then call a message record creation method of the object class instance to create (step 1608) a message record. The message record may include the generated message and the destination indication, among other data. The virtual machine 24 may then call a message record storage method to store (step 1610) the message record in the queue table. Among the other data, the record creation method may include a Time Added time stamp in a Time Stamp field of the message record.

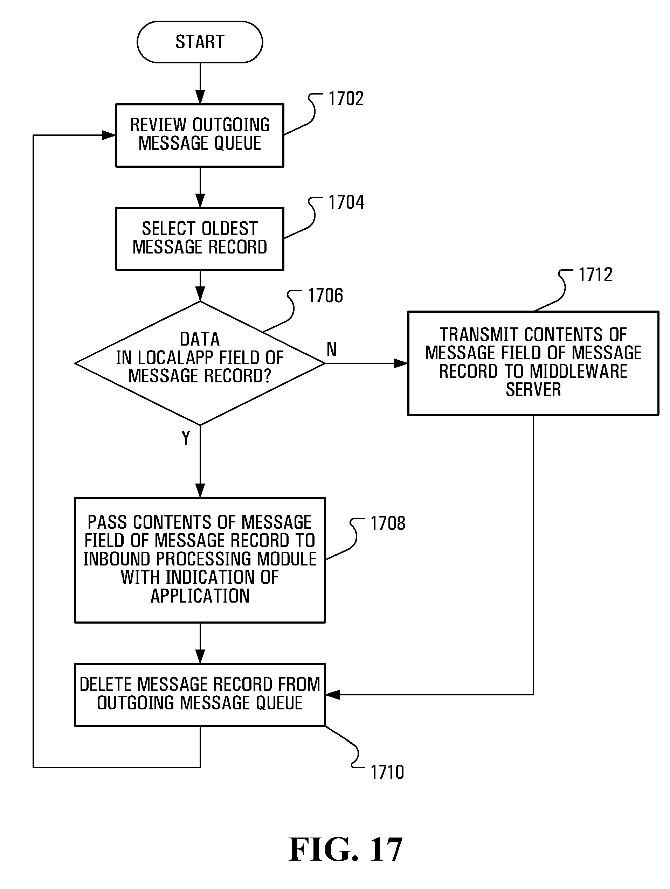

Concurrently to the operation illustrated in FIG. 16, an instance of a message transmission object may process (step 1702, FIG. 17) the queue table. The message transmission object instance may then select (step 1704) the oldest message record in the queue table. The instance of the message transmission object may, for instance, determine which message record is the oldest in the queue table by considering a Time Added time stamp stored in each message record in the queue table. As such, the queue table may be considered to act as a First-In-First-Out (FIFO) queue in that the message transmission object instance attempts to transmit the message at the top of the queue, i.e., the contents of the Message field of the oldest message record, first. Alternative embodiments could feasibly employ other strategies, such as Last-In-First-Out (LIFO) for example.

The message transmission object instance may then determine (step 1706) whether the selected message record has data in the LOCALAPP field. If the selected message record indicates a local application as a destination, the message transmission object instance may then pass (step 1708) the contents of the Message field to the inbound processing module along with an indication of the named local application. The message transmission object instance may then delete (step 1710) the selected message record from the queue table and return to a review of the queue table (step 1702) again, so as to arrange the transmission of the contents of the Message field of the oldest message record in the queue table given that the former oldest message record has been deleted from the queue table.

If the selected message record is determined (step 1706) to have a null entry in the LOCALAPP field, the message transmission object instance may then transmit (step 1712) the contents of the Message field to the middleware server 44. The message transmission object instance may then delete (step 1710) the selected message record from the queue table and return to a review of the queue table (step 1702) again, so as to arrange the transmission of the contents of the Message field of the oldest message record in the queue table given that the former oldest message record has been deleted from the queue table.

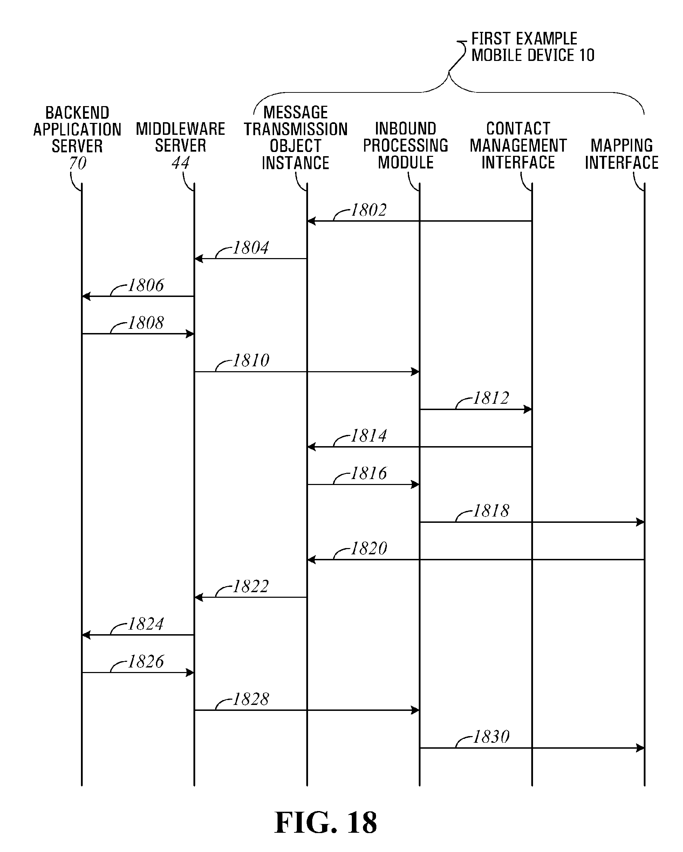

FIG. 18 illustrates a sequence of communications, between the first example mobile device 10 and the middleware server 44, that may occur when the user of the mobile device 10 wishes interact with an application at the backend application server 70. Initially, the middleware server 44 provides the virtual machine 24 with an application definition file for an interface to a contact management application executed at the backend application server 70. Additionally, the middleware server 44 provides the virtual machine 24 with an application definition file for an interface to a mapping application executed at the backend application server 70.

Once the user of the mobile device 10 has initiated the execution of the interface to the contact management application, the user may use a screen that includes edit boxes to indicate a name of a company for which address information is desired from the contact management application executed at the backend application server 70. Upon generating an address request message based on the application definition file, the contact management interface executed on the virtual machine 24 may store the address request message in the queue table (data flow 1802). Upon determining that the address request message is the oldest in the queue table, the message transmission object instance may transmit (data flow 1804) the address request message to the middleware server 44.

At the middleware server 44, the address request message may be reformatted and transmitted (data flow 1806) to the backend application server 70. The backend application server 70 may respond by transmitting (data flow 1808) an address response message to the middleware server 44. The address response message may, for instance, include a street address, a city and a state for the company named in the address request message. The middleware server 44 may first reformat the address response message to include a header that includes an identifier of the contact management interface and then transmit (data flow 1810) the reformatted address response message to the mobile device 10.

At the mobile device 10, the virtual machine 24 may receive the reformatted address response message, remove and parse the header to determine the application identifier, correlate the application identifier with the contact management interface and pass the address response message (without header) to the inbound processing module along with an indication of the contact management interface.

The inbound processing module may process the address response message according to the application definition file for the contact management interface. In particular, the inbound processing module may store the street address, the city and the state specified in the address response message in the local storage 26 in a location associated with the contact management interface. The inbound processing module may also transmit an indication (data flow 1812) to the contact management interface that data has been received and stored locally.

The contact management interface may use the stored information from the address response message as the basis for a screen presented to the user to indicate the result of querying the address of the named company. The presented screen may include a "Map" button as described in the application definition file portion provided above. Responsive to the user clicking the button, the virtual machine 24 may execute the ACTION element associated with the BUTTONCLICK event and, thereby, generate an Inter-Process Communication (IPC) mapping message.

Upon generating the IPC mapping message based on the application definition file, the contact management interface executed on the virtual machine 24 may store the address request message in the queue table (data flow 1814). Upon determining that the IPC mapping message is the oldest in the queue table, the message transmission object instance may determine that the destination for the IPC mapping message is the mapping application interface, also executed by the virtual machine 24. Accordingly, the message transmission object instance may pass (data flow 1816) the IPC mapping message to the inbound processing module along with an indication of the mapping application interface.

The inbound processing module may process the IPC mapping message according to the application definition file for the mapping application interface. In particular, the inbound processing module may store the street address, the city and the state specified in the address response message in the local storage 26 in a location associated with the mapping application interface. The inbound processing module may also transmit an indication (data flow 1818) to the mapping application interface that data has been received and stored locally.

The mapping application interface may react to the receipt of the indication of received data in a manner similar to the manner in which the mapping application interface would react to the receipt of the same data from the user's use of a screen of edit boxes to indicate an address. That is, the mapping application may generate a map request message according to the application definition file.

Upon generating the map request message, the mapping application interface executed on the virtual machine 24 may store the map request message in the queue table (data flow 1820). Upon determining that the address request message is the oldest in the queue table, the message transmission object instance may transmit (data flow 1822) the map request message to the middleware server 44.

At the middleware server 44, the map request message may be reformatted and transmitted (data flow 1824) to the backend application server 70. The backend application server 70 may respond by transmitting (data flow 1826) map response message to the middleware server 44. The map response message may, for instance, include a map image of the location of the street address, city and state specified in the map request message. The middleware server 44 may first reformat the map response message to include a header that includes an identifier of the mapping application interface and then transmit (data flow 1828) the reformatted map response message to the mobile device 10.

At the mobile device 10, the virtual machine 24 may receive the reformatted map response message, remove and parse the header to determine the application identifier, correlate the application identifier with the mapping application interface and pass the map response message (without header) to the inbound processing module along with an indication of the mapping application interface.

The inbound processing module may process the map response message according to the application definition file for the mapping application interface. In particular, the inbound processing module may store the map image included in the map response message in the local storage 26 in a location associated with the mapping application interface. The inbound processing module may also transmit an indication (data flow 1830) to the mapping application interface that data has been received and stored locally.

Responsive to receiving the indication that a map response message has been received, the mapping application interface may read the locally stored map image and present a screen to the user displaying the map image.

Advantageously, the provision for Inter-Process Communication (IPC) provided by aspects of the present embodiment, and exemplified by data flow 1816, may be considered to have eliminated the requirement for the user to copy the address information returned in the contact management interface and paste the address information into the mapping application interface. A task that may require tedious switching between applications to fill in each edit box of the mapping application interface address specification screen.

Advantageously, aspects of the embodiment can be viewed as facilitating the building of an "application suite". In an exemplary scenario, an employee and a manager both require the same base application functionality. However, the manager may require an enhanced version of the application and the employee should not have access to the enhanced version. In particular, it is known that providing everyone the same set of applications and simply "turning off" access to certain (management) aspects of the applications when the applications are provided to "regular" employees should be avoided due to concerns about the security of such a practice and the unnecessary use of memory on the devices of the "regular" employees. Thus, it is desirable to tailor applications for each type of worker and, further, to provide for Inter-Process Communication so that applications provided to certain personnel may communicate with other, function-enhancement applications. Rather than transmitting an XML package to an application executed on a distant server, an XML package may be passed to an application executing on the same mobile device.

Other modifications will be apparent to those skilled in the art and, therefore, the invention is defined in the claims.

## Claims

1. A method of handling outgoing messages, said method comprising:
receiving a document defining a format for outgoing messages, said outgoing messages including a payload;
generating, according to said format, a message;
generating, based on information provided in said document, an indication of a local application to associate with said message;
storing said message; and
storing said indication of said local application in association with said message.

2. The method of claim 1 further comprising:
generating an indication of a version of said local application;
storing said indication of said version of said local application in association with said message.

3. The method of claim 1 or claim 2 wherein said storing of said message and said storing of said indication is in a queue.

4. The method of claim 3 wherein said queue is a table in a relational database.

5. The method of claim 4 wherein said storing said message and said indication of said local application in said queue comprises:
creating a message record that includes said message and said indication of
said local application; and
storing said message record in said table.

6. The method of claim 4 or claim 5 wherein storing said message comprises storing said message in a Message field in said table and said storing said indication of said local application comprises storing said indication of said local application in a Local Application field of said table, where said Local Application field is associated with said Message field.

7. The method of any one of claims 1 to 6 wherein said document is written in an extensible markup language.

8. The method of claim 7 wherein said format for messages is provided as part of an element of said document.

9. The method of claim 8 wherein said information provided in said document comprises a value of an attribute of said element.

10. The method of claim 9 wherein said generating said indication of said local application comprises generating said indication of said local application based on said value of said attribute of said element.

11. A computing device comprising:
a processor; and
computer readable memory in communication with said processor, storing software adapting said device to carry out the method of any preceding claim.

12. A machine-readable medium containing instructions that, when performed by processor in mobile communication device, cause said device to carry out the method of any preceding claim.

13. A method of handling an outbound message queue, said method comprising:
selecting a candidate message record, said candidate message record including a message portion;
determining whether said candidate message record is associated with a local application;
if said candidate message record is associated with said local application:
passing said message portion of said message record to an inbound processing module; and
passing an indication of said local application to said inbound processing module.

14. The method of claim 13 further comprising:
determining whether said candidate message record is associated with an
indication of a version of said local application; and
passing said indication of said version of said local application to said inbound processing module.
